(19) **Europäisches Patentamt**
**European Patent Office**
**Office européen des brevets**

(11) **EP 2 314 633 B1**

(12) **EUROPEAN PATENT SPECIFICATION**

(45) Date of publication and mention
of the grant of the patent:
**20.02.2013 Bulletin 2013/08**

(21) Application number: **09806685.5**

(22) Date of filing: **07.08.2009**

(51) Int Cl.:
*C08F 2/00* $^{(2006.01)}$     *B29C 41/28* $^{(2006.01)}$
*C08F 265/02* $^{(2006.01)}$     *C08J 5/18* $^{(2006.01)}$
*C08F 2/46* $^{(2006.01)}$     *B29C 35/10* $^{(2006.01)}$
*B29C 39/16* $^{(2006.01)}$     *C08F 265/00* $^{(2006.01)}$
*C08F 265/04* $^{(2006.01)}$     *B29K 33/04* $^{(2006.01)}$

(86) International application number:
**PCT/JP2009/064023**

(87) International publication number:
**WO 2010/018793 (18.02.2010 Gazette 2010/07)**

(54) **PROCESS FOR CONTINUOUSLY PRODUCING ACRYLIC RESIN SHEET**

VERFAHREN ZUR KONTINUIERLICHEN HERSTELLUNG EINER ACRYLHARZFOLIE

PROCÉDÉ DE PRODUCTION EN CONTINU DE FEUILLE DE RÉSINE ACRYLIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.08.2008 JP 2008207712**

(43) Date of publication of application:
**27.04.2011 Bulletin 2011/17**

(73) Proprietor: **Mitsubishi Rayon Co., Ltd.**
**Tokyo 100-8253 (JP)**

(72) Inventors:
  • **HIRANO, Takayuki**
    **Otake-shi**
    **Hiroshima 739-0693 (JP)**
  • **OKUTSU, Hajime**
    **Otake-shi**
    **Hiroshima 739-0693 (JP)**
  • **NISHIDA, Naoki**
    **Toyama -shi**
    **Toyama 931-8601 (JP)**
  • **FUNAMI, Eita**
    **Otake-shi**
    **Hiroshima 739-0693 (JP)**
  • **OKAFUJI, Hiroshi**
    **Otake-shi**
    **Hiroshima 739-0693 (JP)**
  • **YAMAZAWA, Hideto**
    **Otake-shi**
    **Hiroshima 739-0693 (JP)**
  • **TAKAYAMA, Daisuke**
    **Otake-shi**
    **Hiroshima 739-0693 (JP)**
  • **ISHIHARA, Yutaka**
    **Otake-shi**
    **Hiroshima 739-0693 (JP)**

(74) Representative: **Jones, Helen M.M.**
**Gill Jennings & Every LLP**
**The Broadgate Tower**
**20 Primrose Street**
**London EC2A 2ES (GB)**

(56) References cited:
JP-A- 6 239 905      JP-A- 50 024 357
JP-A- 2004 323 601      JP-A- 2004 351 649
JP-A- 2007 284 465      JP-A- 2007 284 465
US-A- 4 803 026      US-A- 5 993 951

EP 2 314 633 B1

**Description**

TECHNICAL FIELD

The present invention relates to a method for continuously producing an acrylic resin sheet.

BACKGROUND ART

In recent years, resolution of images has made a dramatic advance in small displays such as mobile phones, portable game machines, car navigation systems, and portable AV appliances. In addition, there has been a strong demand for higher transparency and smaller optical strain than ever in transparent resin sheets for protecting surfaces of these displays.

As for mobile phones, in particular, demand for precision of housing parts has become an order of $\mu$m owing to worldwide trend toward thin profile housing, and protection plates for displays are no exception. Allowance for change in dimensional precision or for warp caused by various heat histories over the period from a stage of a transparent resin sheet as a raw material for protection plates to stages of cutting, printing, and finishing has been becoming severer year by year. In other words, a transparent resin sheet having good optical characteristics, having high thermal resistance, and having small heat shrinkage is the most suitable for protection plates for small displays of recent years.

Polymethyl methacrylate to be used as an optical polymer is used in various optical uses such as optical discs, pickup lenses, and optical films for liquid crystal displays because of its high transparency, small birefringence, and the like as well as its characteristics such as easy processability, easy handling, light weight, and low cost. Further, a polymer with a high polymethyl methacrylate content is needed from the viewpoints of various optical characteristics.

As a method for producing an acrylic resin sheet with a high polymethyl methacrylate content, for example, a continuous cell casting method is known in which a polymerizable compound is poured into a gap between two endless belts at one end thereof, the endless belts being arranged upper and lower sides and running in a horizontal direction, and a plate-like polymer is obtained at the other end (Patent Document 1). By this continuous cell casting method, thermal resistance of the product plate can be improved owing to a high molecular weight of the product plate as compared with a melt extrusion method, and an excellent plate having small heat shrinkage and small warp can be produced because a stretching step is not included in this method.

However, methyl methacrylate which is a monomer of polymethyl methacrylate generally has a slow rate of polymerization. Therefore, in the cell casting method, the device has to be large and long and large endless belts have to be used because it is necessary that the time taken for polymerization of methyl methacrylate and the time taken for the endless belts to pass through the polymerization range of the device have to be made the same in general.

Consequently, increase in an amount of a thermally decomposable polymerization initiator or selection of a polymerization initiator having a low half-life temperature has been carried out with a view to shortening the time taken for polymerization in a device for continuous plate manufacture and thus improving productivity of the device (Patent Document 2). However, there are trade-offs among various properties such as rate of polymerization and thermal resistance, and further an extravagant cooling device is necessary for storage of a viscous liquid as a raw material, and moreover, there is a problem in operability.

In addition, a method of increasing the content of polymer and thus increasing the rate of polymerization is proposed. However, in the case of carrying out thermal polymerization with a syrup having a high degree of polymerization, it is necessary to cool the syrup because polymerization would proceed with decomposition of even a little amount of a thermal initiator when the thermal initiator is previously contained in the syrup, so that an extravagant cooling device is also necessary. By contrast, a method is proposed in which a syrup having a high content of polymer and a low viscosity-syrup containing a thermal initiator are mixed with a static mixer just before the supply (Patent Document 3). In this method, it is necessary to uniformly disperse the thermal initiator into a syrup with a very high viscosity, and hence many units of static mixer are necessary and pressure drop per unit becomes large, so that supply devices such as pumps and lines become extravagant. Moreover, in a continuous cell casting method using a pair of metal endless belts, there is a problem such that foams are easily entrained in a syrup when a highly viscous syrup having a high degree of polymerization is used as a raw material because sharp angle change of the belts is not possible owing to high rigidity of the belts and thus it is difficult to make the angle formed between the pair of belts large when the raw material-syrup is held between the belts.

In addition, a method in which a light curable raw material is used as a polymerizable raw material and one of the endless belts of the continuous cell casting method is substituted with a transparent film, and then the raw material is cured by irradiation with the light (Patent Document 4), and a method in which the raw material is held between support sheets made of transparent film and cured by irradiation with the light in the same way as mentioned above (Patent Document 5) are proposed. However, when these methods are simply applied to a raw material containing a large amount of methyl methacrylate and polymerization and curing are carried out, there is a problem such that improvement of thermal resistance which is a merit of the continuous cell casting method cannot be attained or a product plate which needs excellent optical characteristics may turn yellow.

In recent years, as important required performances of front faceplates, anti-reflection function, anti-glare function, hard coat function, anti-static function, dirt-prevention function, and the like are recited. Laminated articles having such functions have usually been manufactured by a dipping method in which coating materials are directly coated on a plastic base material. However, this method is carried out batchwise and thus the productivity is low, and this is one factor of an increase in cost in the case of manufacturing functional layers. In addition, it is difficult to obtain a uniformly coated layer because unevenness in thickness of the layer is easily caused by fluctuation in a speed of pulling up the plastic base material from an immersion liquid.

Whereas, a method is proposed in which a functional layer is laminated on a substrate surface through an ultraviolet ray-curable adhesion layer, UV irradiation was applied thereon and thus the adhesion layer is cured, then a base material film on which the functional layer has been formed is detached, and thus the functional layer is transferred to the substrate surface (Patent Document 6). By this method, it is possible to carry out transfer in a higher productivity with a relatively simple device. However, there is a problem such that the rate of production is restricted because it is hard to realize good adhesion between the substrate surface and the functional layer. Moreover, there is a problem such that the obtained functional layer is easy to warp owing to residual stress in the ultraviolet ray-curable adhesion layer caused by UV irradiation.

US 5,993,951 discloses a transparent plastic sheet obtained by co-polymerizing 100 parts by weight of methyl methacrylate with 0.1 to 2.0 parts by weight of methacrylic acid and 0.1 to 1.5 parts by weight of glycidyl methacrylate, and having a thickness of not greater than 4 inches, wherein the angular deviation satisfies specified conditions according to the thickness of the sheet and wherein the degree of swelling is not greater than 2.50.

JP 2007-284,465 discloses a method for producing the methacrylic resin molded product. A radically polymerizable monomer (A) consisting essentially of methyl methacrylate is pre-mixed with a multi-stage polymerization copolymer (B) obtained by carrying out at least one stage of polymerization and containing a rubber-like copolymer having a cross-linked structure to prepare a polymerizable mixture (P). The resultant polymerizable mixture (P) is then mixed with a radical polymerization initiator to polymerize a part of the polymerizable mixture (P). Thereby, a syrup is prepared. The obtained syrup is cured by a cast polymerization method for casting the syrup into a mold and polymerizing the syrup.

US 4,803,026 discloses a method of preparing acrylic resin sheets having an excellent heat moldability and solvent resistance by:

(1) preparing a syrup of methyl methacrylate or a monomer mixture comprising at least 60 weight % of methyl methacrylate and not more than 40 weight % of an acrylic acid ester by partially polymerizing the monomer or monomers in the presence of 0.01 to 2.0 weight %, based on the monomer or monomers, of a chain transfer agent, as well as a polymerization initiator; and

(2) incorporating the thus-prepared syrup with 0.02 to 1.0 weight %, based on the syrup, of a cross-linking agent, and subjecting the resulting mixture of cast polymerization under such conditions that if the crosslinking agent is not present, the intrinsic viscosity of the completely polymerized sheet is in the range of 0.05 to 0.12 l/g.

PRIOR ART REFERENCES

PATENT DOCUMENTS

Patent Document 1: Japanese Patent Publication No. Sho 46-41,602
Patent Document 2: Japanese Patent Application Laid-Open No. Hei 4-114,001
Patent Document 3: Japanese Patent Application Laid-Open No. Hei 6-239,905
Patent Document 4: Japanese Patent Application Laid-Open No. 2002-11,742
Patent Document 5: Japanese Patent Application Laid-Open No. 2002-11,741
Patent Document 6: Japanese Patent Application Laid-Open No. 2000-158,599
Patent Document 7: United States Patent No. 5,993,951
Patent Document 8: Japanese Patent Application No. 2007-284,465
Patent Document 9: United States Patent No. 4,803,026

SUMMARY OF THE INVENTION

PROBLEM TO BE SOLVED BY THE INVENTION

It is an object of the present invention to provide a method for continuously producing an acrylic resin sheet which contains methyl methacrylate as an essential component and is excellent in thermal resistance, small heat shrinkage, and optical characteristics, and further to provide a method for continuously producing a laminated article in which a functional layer is laminated and which is excellent in anti-warp property and good adhesion in a short polymerization and curing time.

MEANS FOR SOLVING THE PROBLEM

The present invention is a method for continuously producing an acrylic resin sheet containing 50% by mass or more of methyl methacrylate units, which comprises the steps of:

supplying an active energy ray-polymerizable viscous liquid which contains a polymer, satisfies the following equations (1) and (2), and has a viscosity of 5,000 mPa·s or more at 20°C to an endless belt which is transferred;
laminating a film transmissive to the active energy ray on the liquid; and
irradiating the liquid with the active energy ray through the film to cure the liquid.

$$30,000 \leq Mw \leq 500,000 \qquad (1)$$

$$35 - (9/200,000) \times Mw \leq P \leq 60 \qquad (2)$$

In these equations, Mw represents a weight average molecular weight [-] of the polymer contained in the liquid, and P represents a content [% by mass] of the polymer contained in the liquid.

In addition, the present invention is a method for continuously producing an acrylic resin sheet containing 50% by mass or more of methyl methacrylate units, which comprises the steps of:

holding an active energy ray-polymerizable viscous liquid which contains a polymer, satisfies the following equations (1) and (2), and has a viscosity of 5,000 mPa·s or more at 20°C between first and second films, at least one of which is transmissive to the active energy ray; and
irradiating the liquid with the active energy ray from outside of one or both of the films to cure the liquid.

$$30,000 \leq Mw \leq 500,000 \qquad (1)$$

$$35 - (9/200,000) \times Mw \leq P \leq 60 \qquad (2)$$

In these equations, Mw represents a weight average molecular weight [-] of the polymer contained in the liquid, and P represents a content [% by mass] of the polymer contained in the liquid.

EFFECT OF THE INVENTION

According to the present invention, it is possible to continuously produce an acrylic resin sheet which contains methyl methacrylate units as an essential component and has excellent characteristics. In particular, it is possible to increase production output and to downsize the polymerization device because polymerization can be carried out in a short time, and moreover, it is possible to continuously produce a sheet which has small heat shrinkage and small unevenness in thickness, and which is excellent in optical characteristics. Further, it is possible to continuously produce a sheet in which a functional layer is laminated and which has small warp and is excellent in adhesion.

BRIEF DESCRIPTION OF DRAWINGS

Figure 1: A schematic side view showing one embodiment of the production system according to the method of the present invention, using an endless belt and a film.
Figure 2: A schematic side view showing one embodiment of the production system according to the method of the present invention, using first and second films.
Figure 3: A schematic plan view showing positions of points for measurement of length for calculation of heat shrinkage factor of the resin sheet in each Example.

BEST MODE FOR CARRYING OUT THE INVENTION

In the present invention, the resin sheet to be obtained necessarily contains methyl methacrylate units in an amount of 50% by mass or more and preferably in an amount of 90% by mass or more.

The active energy ray-polymerizable viscous liquid to be used in the present invention is composed of, for example, a polymerizable monomer, a polymer, an active energy ray-decomposable polymerization initiator, and another optional component.

The polymerizable monomer to be used in the present invention is a monomer that forms a resin by curing caused by irradiation with an active energy ray. Various kinds of monomers besides methyl methacrylate can be jointly used as long as an acrylic resin sheet thus obtained contains 50% by mass or more of methyl methacrylate units. For example, alkyl methacrylates other than methyl methacrylate such as ethyl methacrylate, isopropyl methacrylate, butyl methacrylate, 2-ethylhexyl methacrylate, phenyl methacrylate, and benzyl methacrylate; alkyl acrylates such as methyl acrylate, ethyl acrylate, butyl acrylate, and 2-ethylhexyl acrylate; unsaturated carboxylic acids such as acrylic acid, methacrylic acid, maleic acid, and itaconic acid; acid anhydrides such as maleic anhydride and itaconic anhydride; maleimide derivatives such as N-phenyl maleimide, N-cyclohexyl maleimide, and N-t-butyl maleimide; hydroxyl group-containing monomers such as 2-hydroxypropyl acrylate, 2-hydroxyethyl acrylate, and 2-hydroxypropyl methacrylate; nitrogen-containing monomers such as (meth)acrylamide, (meth)acrylonitrile, diacetone acrylamide, and dimethylaminoethyl methacrylate; epoxy group-containing monomers such as allyl glycidyl ether, glycidyl acrylate, and glycidyl methacrylate; styrene type monomer such as styrene and $\alpha$-methyl styrene; and crosslinking agents such as ethylene glycol diacrylate, allyl acrylate, ethylene glycol dimethacrylate, allyl methacrylate, divinylbenzene, and trimethylolpropane triacrylate can be recited. These compounds can be used alone or in a combination of plural kinds thereof. Note that "(meth)acrylic" means "methacrylic" or "acrylic".

The polymer to be used in the present invention is not particularly limited as long as the acrylic resin sheet thus obtained contains 50% by mass or more of methyl methacrylate units. For example, a homopolymer or copolymer of the aforementioned polymerizable monomer can be used. In particular, it is preferable to use polymethyl methacrylate from the viewpoint of optical performance.

It is necessary for weight average molecular weight Mw and the content of the polymer to be used in the present invention to satisfy the aforementioned equations (1) and (2). Namely, weight average molecular weight Mw of the polymer is from 30,000 to 500,000, and when Mw is less than 30,000, products tend to have low molecular weights and this is disadvantageous from the viewpoint of high thermal resistance of the products which is a merit of the cast process. In addition, when Mw is more than 500,000, production of the active energy ray-polymerizable viscous liquid becomes difficult, though the weight average molecular weight of the obtained resin sheet can be raised, and moreover, when the liquid is made by dissolution of the polymer into the monomer, the time for dissolution becomes long, and when the liquid is made by polymerization of a part of the monomer, it is necessary to carry out polymerization slowly in order to obtain a high weight average molecular weight, so that, in either case, the situation is not preferable from the viewpoint of productivity.

When content P of the polymer in the active energy ray-polymerizable viscous liquid is less than the left side value of equation (2), in the case of using a monomer in which the essential component is a monofunctional monomer, namely, methyl methacrylate in the present invention, polymerization thereof takes a long time because decomposition of the active energy ray-decomposable polymerization initiator is consumed for chain termination reaction to a large extent at the initial stage of polymerization owing to small entanglement of the molecular chains. Factors that affect this rate of polymerization include not only the content of the polymer but also the molecular weight of the polymer, so that the left side of equation (2) contains weight average molecular weight Mw of the polymer.

In addition, when content P of the polymer in the active energy ray-polymerizable viscous liquid is more than 60% by mass, this situation is advantageous from the viewpoint of the rate of polymerization, but influence caused by drying of the surface of the liquid becomes not negligible because viscosity change caused by evaporation of the monomer becomes large in this range, and this affects the surface appearance of the product sheet. More exactly, when the active energy ray-polymerizable viscous liquid is supplied, the liquid dries and solidifies at piping or supply ports such as die and a large amount of solid materials adhere at the supply ports, so that supply of the liquid becomes difficult. Or, the surface of the liquid dries on the endless belt or at the time before the liquid is held between the first and second films, and a thin layer is formed on the surface, and when the film is laminated thereon, roughness on the thin layer remains in the finished product and thus flatness of the finished product is deteriorated. In addition, when a polymer having a low molecular weight is contained, the viscosity change becomes relatively small, but the molecular weight of a resin sheet thus obtained becomes low because the polymer having a low molecular weight is contained in an amount of 60% by mass or more, and thus there causes a problem such as low thermal resistance.

The active energy ray-decomposable polymerization initiator to be used in the present invention is not particularly limited as long as it generates a radical by irradiation with the active energy ray and does not damage transparency of a cured resin thus obtained, and various active energy ray-decomposable polymerization initiators can be used. Typical examples thereof include acetophenone- or benzophenone-based active energy ray-decomposable polymerization initiators. In particular, 1-hydroxy-cyclohexyl-phenyl ketone (for example, trade name Irgacure 184, manufactured by Ciba Specialty Chemicals, Inc.), 2-hydroxy-2-methyl-1-phenylpropane-1-on (for example, trade name Darocur 1173, manufactured by Ciba Specialty Chemicals, Inc.), and benzoin ethylether (for example, trade name Seikuol BEE, manufactured by Seiko Chemical Co., Ltd.) are preferable.

The active energy ray-decomposable polymerization initiator is usually used in an amount of 0.01 to 2 parts by mass relative to 100 parts of the active energy ray-polymerizable viscous liquid and preferably used in an amount of 0.05 to 1 part by mass. The lower limits of these ranges are significant with regard to the rate of polymerization and the polymerization time. The upper limits of these ranges are significant with regard to optical performance and weather resistance of the resin sheet.

The active energy ray-polymerizable viscous liquid may contain various additives such as a thermally decomposable polymerization initiator, anti-oxidant, ultraviolet rays absorber, dye and pigment, release agent, and polymerization inhibitor.

The viscosity of the active energy ray-polymerizable viscous liquid is 5,000 mPa·s or more at 20°C in order to maintain a desired thickness of the active energy ray-polymerizable viscous liquid supplied on the endless belt or in between first and second films. In addition, the viscosity of the active energy ray-polymerizable viscous liquid is preferably 10,000 mPa·s or more in order to obtain a good appearance on the surface thereof because one side or both sides of the liquid are covered by a material having low stiffness such as film.

The method for supplying the active energy ray-polymerizable viscous liquid is not particularly limited. Supply from an ordinary piping or hose, or various supply methods can be used. However, a method of supplying the viscous liquid in a sheet shape by using a supply die is preferable because the viscous liquid is continuously supplied and formed into a sheet shape. As the method of forming the active energy ray-polymerizable viscous liquid in a sheet shape besides the above-mentioned method of supplying the liquid from the die, for example, a method of stretching out the liquid through two rolls after holding the liquid between an endless belt and a film transmissive to the active energy ray or between first and second films can be recited. A combination of these methods may also be available.

The material of the endless belt to be used in the present invention is not particularly limited. It can be freely selected from metals, resins, and the like as long as it can maintain the active energy ray-polymerizable viscous liquid in a sheet shape. In particular, a metal endless belt having high stiffness is preferable because there is polymerization shrinkage at the time of polymerization and curing, and a stainless steel endless belt is more preferable from the viewpoint of corrosion resistance against monomers and the like. In addition, a stainless steel endless belt having a mirror finish is particularly preferable because the surface of the resin sheet which becomes the final product is obtained by transfer of the surface of the endless belt.

It is possible to previously form a detachable functional layer on the endless belt in the step of supplying the active energy ray-polymerizable viscous liquid to the endless belt, and to integrate the functional layer with an acrylic resin sheet to be produced to provide the functional layer on the endless belt side of the sheet.

As the film transmissive to the active energy ray to be used in the present invention, conventional films can be used. In addition, when a detachable property is necessary, a detachable layer may be provided on the surface of the film. Examples of the film include synthetic resin films such as polyethylene terephthalate film, polypropylene film, polycarbonate film, polystyrene film, polyamide film, polyamide-imide film, polyethylene film, and polyvinylchloride film; cellulose films such as cellulose acetate film; film-like materials such as Japanese paper and foreign paper like cellophane paper and Glassine paper; composite films thereof or composite sheets thereof; and these films or sheets on which detachable layers are provided.

Among them, a film having a softening point of 100°C of higher is preferable so that it does not soften by the exothermic heat of polymerization, and polyethylene terephthalate film is more preferable from the viewpoints of high transmissiveness for the active energy ray and high surface properties. The thickness thereof is preferably 10 $\mu$m or more and more preferably 25 $\mu$m or more from the viewpoint of stiffness. In addition, the thickness is preferably 300 $\mu$m or less and more preferably 200 $\mu$m or less from the viewpoint of cost.

It is possible to form a detachable layer when the film transmissive to the active energy ray has insufficient detachability. As a material for the detachable layer, conventional polymers and waxes capable of forming the detachable layer can be suitably selected. As a method for forming the detachable layer, for example, a method is recited in which a coating material obtained by dissolution of a paraffin wax, acrylic-, urethane-, silicone-, melamine-, urea-, urea-melamine-, cellulose-, or benzoguanamine- resin and an acrylic-, urethane-, silicone-, melamine-, urea-, urea-melamine-, cellulose-, or benzoguanamine- surfactant, alone or in a combination of two or more kinds thereof, as an essential component in an organic solvent or water is applied on the film by a conventional printing method such as graver printing, screen printing, or offset printing, and then dried (or cured in the case of a curable coating material such as thermoset resin, ultraviolet-curable resin, electron beam-curable resin, and radioactive ray-curable resin). The thickness of the detachable layer is not particularly limited, and is suitably selected from the range of about 0.1 to 3 $\mu$m. The lower limit of this range is significant with regard to easiness of detachment and the upper limit of this range is significant with regard to prevention of film separation during polymerization.

In addition, the surface of the film transmissive to the active energy ray, which is facing to the active energy ray-polymerizable viscous liquid, has surface roughness (Ra) defined by JIS B0601 of preferably 100 nm or less, and more preferably 10 nm or less, because this surface condition is transferred to the surface of a resin sheet to be obtained as a product. Note that, when it is intended to form roughness on the product surface, it is possible to select films on which various shapes of roughness are formed.

As the first and second films, between which the active energy ray-polymerizable viscous liquid is held, at least one of them needs to be a film transmissive to the active energy ray because they are irradiated with the active energy ray afterwards. In this case, a film having the quality and surface roughness mentioned above is preferably used as the film transmissive to the active energy ray.

In addition, the film not transmissive to the active energy ray among the first and second films can be selected from all sorts of films such as various resin films and various metal films because this film need not be transmissive to the active energy ray. The thickness and surface roughness of this film can be selected in the same manner as in the case of the aforementioned film transmissive to the active energy ray. The film transmissive to the active energy ray can also be used for this film, and thus it is possible that both the first and second films are the same.

It is possible to use the film transmissive to the active energy ray or at least one of the first and second films, on one side of which a detachable functional layer that is described later is formed (hereinafter, referred to as a "function transfer film"), and to polymerize and cure the active energy ray-polymerizable viscous liquid in such a way that the functional layer side of the film is brought into contact with the active energy ray-polymerizable viscous liquid to produce an integrated product of the functional layer with an acrylic resin sheet, namely, a resin sheet in which the functional layer is laminated.

In the present invention, examples of the active energy ray to be irradiated include X-ray, ultraviolet rays, and electron beam. In particular, ultraviolet rays are preferable because of easiness in operation of the apparatus. Ultraviolet rays can be irradiated from various ultraviolet rays irradiation devices and, for example, high pressure mercury lamps, low pressure mercury lamps, metal halide lamps, xenon lamps, chemical lamps, germicidal lamps, black light lamps, and ultraviolet LEDs can be used.

Irradiation intensity of the active energy ray can be determined by a relation between the concentration of an active energy ray-decomposable polymerization initiator contained in the active energy ray-polymerizable viscous liquid and the irradiation time, and it is preferably in the range of from 1 to 30 mW/cm$^2$ in the case of the aforementioned active energy ray-polymerizable viscous liquid from the viewpoint of polymer growth rate. The lower limit of this range is significant because the rate of polymerization can be raised by the increase of decomposition of the polymerization initiator. In addition, the upper limit of this range is significant because the problem of lowering of the molecular weight of the product sheet caused by the situation such that an excess increase of decomposition of the polymerization initiator does not effectively function for the polymer growth of the active energy ray-polymerizable viscous liquid and is largely consumed for the termination reaction, and the problem of yellowing of the product caused by excess irradiation with the active energy ray, can be prevented.

When the film transmissive to the active energy ray is used for both of the first and second films in the case of producing the resin sheet using the first and second films, the active energy ray can be irradiated from both sides of the films. By irradiating the active energy ray from both sides of the films, it is possible to reduce differences in the intensity of irradiation in the thickness direction when a thick sheet is produced, and thus it is possible to reduce differences in the rate of polymerization in the thickness direction, and further it is possible to reduce warp of the resin sheet.

A rate of production of the resin sheet of the present invention is preferably 0.5 to 15 m/min and more preferably 1 to 10 m/min. When the rate is too slow, there is a problem of reduction of the production output of the resin sheet to be obtained, and when the rate is too fast, the length of a section over which the active energy ray is irradiated in order to take time necessary for polymerization becomes long.

A temperature condition at the time of irradiating and curing the resin sheet with the active energy ray in the present invention can be selected in consideration of the rate of polymerization, viscosity conditions, and the like. For example, when the active energy ray-polymerizable viscous liquid is irradiated with the active energy ray, the temperature is preferably at the boiling point of the monomer or lower, and in the case of methyl methacrylate monomer, the temperature is 100°C or lower. In addition, in the case of polymerization of methyl methacrylate monomer, it is known that the lower the polymerization temperature becomes, the more syndiotactic component increases in bonding configuration of the monomer units in the polymer. The more syndiotactic component increases, the higher the glass transition temperature of the polymer becomes, and thus the higher the thermal resistance becomes. The polymerization temperature at the time of the active energy ray irradiation is preferably 50°C or lower from the viewpoint of improvement of thermal resistance.

For a resin irradiated and cured with the active energy ray, it may be properly carried out to subject the resin to heat treatment at a glass transition temperature or higher determined by a combination of a monomer and a polymer to be used from the viewpoint of reduction of the residual monomer. In the case of polymethyl methacrylate, it is preferable to carry out heat treatment at 100°C or higher.

The thickness of the resin sheet is not particularly limited, but it is preferably 5 mm or less. When the thickness is 5 mm or less, it is easy to remove the exothermic heat of polymerization, and thus generation of foams in the resin sheet caused by boiling of unreacted monomers tends to be prevented.

Hereinafter, embodiments of the system for carrying out the method of the present invention will be explained with reference to figures. Note that, the present invention is not limited to these embodiments.

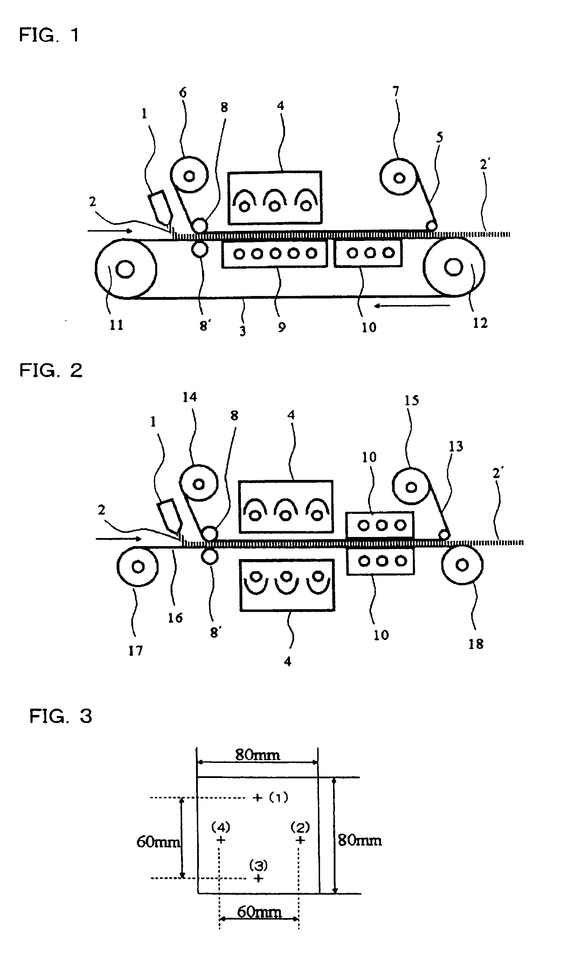

Figure 1 is a schematic side view showing one embodiment of the production system, using an endless belt and a film, according to the method of the present invention. In the embodiment of Figure 1, an endless belt 3 is transferred endlessly while being placed under tension by main pulleys 11 and 12. An active energy ray-polymerizable viscous liquid 2 is supplied on the endless belt 3 in a sheet shape from a supply die 1, and the upper surface of the active energy ray-polymerizable viscous liquid 2 is laminated by a film 5 transmissive to the active energy ray, the film 5 being supplied from a device 6 for letting out a film transmissive to the active energy ray, and the liquid 2 with the film 5 is passed between an upper surface press roll 8 and a lower surface press roll 8', and is irradiated with the active energy ray from an active energy ray-irradiation device 4 while being adjusted at a desired temperature with a former stage-heating mechanism 9, and the liquid 2 is cured. Subsequently, a thus cured liquid 2 with the film 5 is subjected to heat treatment with a latter stage-heating mechanism 10, and a resulting resin sheet 2' is detached from the film 5 and the endless belt 3, and the film 5 is wound up with a device 7 for winding up a film transmissive to the active energy ray.

In the present invention in which an endless belt and a film are used, the endless belt, the active energy ray-polymerizable viscous liquid, and the film transmissive to the active energy ray may be laminated after the active energy ray-polymerizable viscous liquid is held between the endless belt and the film transmissive to the active energy ray. In the embodiment of Figure 1, the active energy ray-polymerizable viscous liquid 2 is supplied on the endless belt 3, and then the film 5 transmissive to the active energy ray is laminated thereon, but the present invention is not limited to this order. For example, an active energy ray-polymerizable viscous liquid may be supplied on a film transmissive to the active energy ray at first and then laminated on an endless belt, or all three of them may be laminated simultaneously. The method of present invention is different from a continuous cell casting method using a pair of metal endless belts, in that, by adopting a film at least on one side, it can make the angle formed between the surface of the endless belt and the facing film transmissive to the active energy ray large at the time of lamination, and thus it is possible to carry out lamination without entrainment of foams even in the case of using an active energy ray-polymerizable viscous liquid having a highly viscosity. In addition, by using the film 5 transmissive to the active energy ray on which a detachable functional layer is formed and by transferring and integrating the functional layer to the resin sheet 2', it is possible to continuously obtain a resin sheet in which the functional layer is laminated (a resin laminate).

Figure 2 is a schematic side view showing one embodiment of the production system, using first and second films, according to the method of the present invention. In the embodiment of Figure 2, a film transmissive to the active energy ray on the upper side is a first film 13, and a film transmissive to the active energy ray on the lower side, provided instead of an endless belt, is a second film 16. Further in Figure 2, 14 is a device for letting out the first film, 15 is a device for winding up the first film, 17 is a device for letting out the second film, and 18 is a device for winding up the second film.

In the embodiment of Figure 2, active energy ray-irradiation devices 4 are provided on the upper and lower sides, respectively, and the active energy ray is irradiated from both sides, and thereby an active energy ray-polymerizable viscous liquid 2 is cured. In addition, latter stage-heating mechanisms 10 are also provided on the upper and lower sides, and heat treatment is carried out from both sides. Note that, the present invention is not limited to this embodiment, and it is possible, for example, that the active energy ray is irradiated from only one side, or heat treatment is carried out from only one side. In addition, in the embodiment of Figure 2, the first film 13 and the second film 16 are arranged on the upper and lower sides, respectively. Note that, the present invention is not limited to this embodiment, and it is possible, for example, that the first film 13 and the second film 16 are arranged in parallel on both right and left sides, and the supplied active energy ray-polymerizable viscous liquid is held between the two films and transferred from the upper side to the lower side while being irradiated with the active energy ray, and thereby polymerized and cured.

In the embodiments of Figure 1 and Figure 2, a step of detaching the obtained resin sheet 2' from the endless belt 3 and the film 5 transmissive to the active energy ray or from the first film 13 and the second film 16 is included. In addition, in Figure 1 and Figure 2, detachment of the films is carried out after heat treatment with the latter stage-heating mechanism 10, but the present invention is not limited to this order, and detachment of the films may be carried out before heat treatment with the latter stage-heating mechanism 10.

In the next place, the function transfer film will be explained in detail.

A preferable embodiment of the present invention is to use a film transmissive to the active energy ray, on one side of which a detachable functional layer is formed, and to polymerize and cure an active energy ray-polymerizable viscous liquid in such a way that the functional layer side of the film is brought into contact with the active energy ray-polymerizable viscous liquid to make a resin sheet in which the functional layer is laminated, and subsequently, to detach the resin sheet from an endless belt and the film transmissive to the active energy ray. In this embodiment, the functional layer is transferred to the resin sheet detached and a resin sheet in which the functional layer is laminated is obtained. Note that, the sentence such that "the functional layer side of the film is brought into contact with the active energy ray-polymerizable viscous liquid" includes the case where the functional layer is brought into contact with the active energy ray-polymerizable viscous liquid through an arbitral component layer such as adhesion layer.

A further preferable embodiment of the present invention is to use the first and second films, on one side of at least one of which a detachable functional layer is formed, and to polymerize and cure the active energy ray-polymerizable viscous liquid in such a way that the functional layer side of the film is brought into contact with the active energy ray-polymerizable viscous liquid to make a resin sheet in which the functional layer is laminated. Also in this embodiment, when the resin sheet is detached from both films, the functional layer is transferred to the resin sheet thus detached and a resin sheet in which the functional layer is laminated is obtained.

It is preferable that the functional layer has at least one function of anti-reflection, anti-glareness, hard coat, anti-staticity, and dirt-prevention. The functional layer may be composed of a single layer having the above-mentioned function or plural layers each having the above-mentioned function.

As a base material film on which the functional layer is laminated, the aforementioned film transmissive to the active energy ray can be used. It is preferable that the base material film be a detachable film because the functional layer needs to be detached, and when the base material film has insufficient detachability, a detachable layer may be formed on the surface of the base material film.

An anti-reflection layer having anti-reflection function may be composed of any materials as long as it can suppress the reflected light normally to the extent of 20% or less of the incident light on the surface of the resin laminate, preferably 10% or less, and more preferably 5% or less. In order to give such a function, for example, a method of forming a laminate structure from two or more layers each having a different reflective index can be recited.

In the case when the laminate structure is formed from two or more layers each having a different reflective index, the reflective index of each layer is not particularly limited. For example, it is preferable that the outermost surface facing to the air be a low reflective index layer having a reflective index of about 1.3 to 1.5, and a high reflective index layer located on the substrate side of the low reflective index layer have a reflective index of 1.6 to 2.0. When the reflective indices are in those ranges, the reflected light of the incident light can be sufficiently suppressed.

The thicknesses of the low reflective index layer and the high reflective index layer are not particularly limited. The thickness of each layer is preferably 50 to 200 nm and more preferably 70 to 150 nm. When the thickness of each layer is in this range, the reflected light having a perceivable wave length can be sufficiently suppressed.

A component forming the low reflective index layer is preferably a material having a reflective index of about 1.3 to 1.5. For example, a material which is composed of a curable compound to be cured by condensation polymerization such as alkoxysilane or alkylalkoxysilane and mainly contains siloxane bond can be recited. Specific examples thereof include materials made up by a siloxane resin in which a part of siloxane bonds is substituted by hydrogen atom, hydroxyl group, unsaturated group, or alkoxyl group.

In addition, it is preferable to add colloidal silica to the layer of the siloxane resin from the viewpoint of attaining a lower reflective index. Colloidal silica is a colloidal dispersion in which fine particles of porous silica and/or non-porous silica are dispersed in a dispersion medium. Note that, porous silica is a low-density particulate material containing air inside, each particle of which is porous or hollow. Porous silica has a reflective index of 1.20 to 1.40, which is lower than that of normal silica, namely, 1.45 to 1.47. Therefore, in the present invention, it is more preferable to use porous silica in order to lower the reflective index of the low reflective index layer.

Further, it is also possible to form the low reflective index layer by adding colloidal silica to an ultraviolet ray-curable mixture that is described later and by curing the resulting mixture. In addition, it is also possible to use colloidal silica which have been subjected to a surface treatment with a silane coupling agent.

These curable compounds mentioned above are cured by irradiation with an active energy ray such as electron beam, radioactive ray, or ultraviolet ray or by heating. These curable compounds may be used alone or in a combination of two or more kinds thereof.

A component forming the high reflective index layer is preferably a material having a reflective index of about 1.6 to 2.0. A material containing a metal alkoxide which forms a metal oxide by hydrolysis and forms dense layer can be preferably used. The metal alkoxide is preferably a compound having a chemical formula of $M(OR)_m$, wherein M represents a metal, R represents a hydrocarbon group having 1 to 5 carbon atoms, and m represents a valence of the metal M (m being 3 or 4). Examples of the metal M include titanium, aluminum, zirconium, and tin, and in particular, titanium is preferable. Specific examples of the metal alkoxide include titanium methoxide, titanium ethoxide, titanium n-propoxide, titanium isopropoxide, titanium n-butoxide, titanium isobutoxide, aluminum ethoxide, aluminum isopropoxide, aluminum butoxide, aluminum t-butoxide, tin t-butoxide, zirconium ethoxide, zirconium n-propoxide, zirconium isopropoxide, and zirconium n-butoxide.

It is preferable to add fine particles of a metal oxide having a high reflective index, which is at least one of $ZrO_2$, $TiO_2$, NbO, ITO, ATO, $SbO_2$, $In_{2O3}$, $SnO_2$, and ZnO, to the metal alkoxide which forms a metal oxide from the viewpoint of attaining a higher reflective index.

Further, it is also possible to form the high reflective index layer by adding the fine particles of a metal oxide having a high reflective index to the aforementioned ultraviolet ray-curable mixture and by curing the resulting mixture. In addition, it is also possible to use fine particles of a metal oxide having a high reflective index which have been subjected to a surface treatment.

The method for forming the anti-reflection layer is not particularly limited. For example, a casting method, roll coating method, bar coating method, spray coating method, air knife coating method, spin coating method, flow coating method, curtain coating method, film covering method, and dipping method can be used.

These curable compounds mentioned above are cured by irradiation with an active energy ray such as electron beam, radioactive ray, or ultraviolet ray or by heating. These curable compounds may be used alone or in a combination of two or more kinds thereof.

It is preferable to form an adhesion layer and/or a hard coat layer on the surface of the anti-reflection layer which is to come in contact with the active energy ray-polymerizable viscous liquid. When the adhesion layer is formed, adhesion of the interface becomes good. When the hard coat layer is formed, hardness of the anti-reflective laminate becomes good.

Further, a surface reflection rate of the anti-reflective laminate obtained in the present invention is preferably 2% or lower and more preferably 1% or lower. This is because reflection of surrounding lights and the like can be suppressed and visibility of image is not lowered even in the outdoors.

The hard coat layer having a hard coat function is for improving abrasion resistance of the surface of the laminate, and is made by curing of a curable mixture composed of various curable compounds which give abrasion resistance into a shape of layer. As the curable mixture, a curable mixture containing a curable compound to be cured by radical polymerization such as an ultraviolet ray-curable mixture that is described later or a curable mixture containing a curable compound to be cured by condensation polymerization such as alkoxysilane or alkylalkoxysilane can be recited. These curable compounds are preferably cured by irradiation with an active energy ray such as electron beam, radioactive ray, or ultraviolet ray or by heating. These curable compounds may be used alone or in a combination of two or more kinds thereof. Note that, even in the case when the curable compound is used alone, it is referred to as "a curable mixture" for convenience.

In the present invention, it is preferable that the hard coat layer be a layer formed from an ultraviolet ray-curable mixture which is cured by ultraviolet rays. Hereinafter, the ultraviolet ray-curable mixture will be explained.

As the ultraviolet ray-curable mixture, it is preferable to use an ultraviolet ray-curable mixture containing a compound having at least two (meth)acryloyloxy groups in the molecule and an active energy ray-decomposable polymerization initiator from the viewpoint of productivity.

Essential examples of the compound having at least two (meth)acryloyloxy groups in the molecule include an esterification product to be obtained from 1 mole of a polyhydric alcohol and at least 2 moles of (meth)acrylic acid or a derivative thereof and an esterification product to be obtained from a polyhydric alcohol, a polyvalent carboxylic acid or an anhydride thereof, and (meth)acrylic acid or a derivative thereof.

Specific examples of the esterification product to be obtained from 1 mole of a polyhydric alcohol and at least 2 moles of (meth)acrylic acid or a derivative thereof include polyethylene glycol di(meth)acrylates such as diethylene glycol di(meth)-acrylate, triethylene glycol di(meth)acrylate, and tetraethylene glycol di(meth)-acrylate; alkyldiol di(meth) acrylates such as 1,4-butanediol di(meth)acrylate, 1,6-hexanediol di(meth)acrylate, and 1,9-nonanediol di(meth)acrylate; and poly(meth)-acrylates of polyols having at least 3 functional groups such as trimethylolpropane tri(meth)acrylate, trimethylolethane tri(meth)acrylate, pentaglycerol tri(met)acrylate, pentaerythritol tri(meth)acrylate, pentaerythritol tetra (meth)acrylate, glycerine tri(meth)acrylate, dipentaerythritol tri(meth)acrylate, dipentaerythritol tetra(meth)-acrylate, dipentaerythritol penta(meth)acrylate, dipentaerythritol hexa(meth)-acrylate, tripentaerythritol tetra(meth)acrylate, tripentaerythritol penta(meth)-acrylate, tripentaerythritol hexa(meth)acrylate, and tripentaerythritol hepta(meth)-acrylate.

Further, Examples of a preferable combination of a polyhydric alcohol, a polyvalent carboxylic acid or an anhydride thereof, and (meth)acrylic acid among a combination of a polyhydric alcohol, a polyvalent carboxylic acid or an anhydride thereof, and (meth)acrylic acid or a derivative thereof include malonic acid/trimethylolethane/(meth)acrylic acid, malonic acid/trimethylolpropane/(meth)acrylic acid, malonic acid/glycerine/(meth)acrylic acid, malonic acid/pentaerythritol/(meth)-acrylic acid, succinic acid/trimethylolethane/(meth)acrylic acid, succinic acid/trimethylolpropane/(meth)acrylic acid, succinic acid/glycerine/(meth)acrylic acid, succinic acid/pentaerythritol/(meth)acrylic acid, adipic acid/trimethylolethane/(meth)acrylic acid, adipic acid/trimethylolpropane/(meth)acrylic acid, adipic acid/glycerine/(meth)acrylic acid, adipic acid/pentaerythritol/(meth)acrylic acid, glutaric acid/trimethylolethane/(meth)acrylic acid, glutaric acid/trimethylolpropane/(meth)acrylic acid, glutaric acid/glycerine/(meth)acrylic acid, glutaric acid/pentaerythritol/(meth)acrylic acid, sebacic acid/trimethylolethane/(meth)acrylic acid, sebacic acid/trimethylolpropane/(meth)acrylic acid, sebacic acid/glycerine/(meth)-acrylic acid, sebacic acid/pentaerythritol/(meth)acrylic acid, fumaric acid/trimethylolethane/(meth)acrylic acid, fumaric acid/trimethylolpropane/(meth)acrylic acid, fumaric acid/glycerine/(meth)acrylic acid, fumaric acid/pentaerythritol/(meth)acrylic acid, itaconic acid/trimethylolethane/(meth)acrylic acid, itaconic acid/trimethylolpropane/(meth)acrylic acid, itaconic acid/glycerine/(meth)acrylic acid, itaconic acid/pentaerythritol/(meth)acrylic acid, maleic anhydride/trimethylolethane/(meth)acrylic acid, maleic anhydride/trimethylolpropane/(meth)acrylic acid, maleic anhydride/glycerine/(meth)acrylic acid, and maleic anhydride/pentaerythritol/(meth)acrylic acid.

Other examples of the compound having at least two (meth)acryloyloxy groups in the molecule include an urethane (meth)acrylate obtained from the reaction between 1 mole of polyisocyanate obtained by trimerization of a diisocyanate such as trimethylolpropane toluilene diisocyanate, hexamethylene diisocyanate, trilene diisocyanate, diphenylmethane diisocyanate, xylene diisocyanate, 4, 4'-methylene-bis(cyclohexyl isocyanate), isophorone diisocyanate, or trimethyl hexamethylene diisocyanate with at least 3 moles of an acrylic monomer having an active hydrogen such as 2-hydroxyethyl (meth)acrylate, 2-hydroxypropyl (meth)acrylate, 2-hydroxy-3-methoxypropyl (meth)acrylate, N-methylol (meth)acrylamide, N-hydroxy (meth)acrylamide, 1,2,3-propanetriol-1,3-di(meth)acrylate, and 3-acryloyloxy-2-hydroxypropyl (meth)acrylate; poly[(meth)acryloyloxyethylene]isocyanurate such as di(meth)acrylate or tri(meth)acrylate of tris (2-hydroxyethyl)isocyanuric acid; epoxypoly(meth)acrylate; and urethane poly(meth)acrylate. Note that, "(meth)acryl" means "methacryl" or "acryl".

Examples of the active energy ray-decomposable polymerization initiator include carbonyl compounds such as benzoin, benzoin methyl ether, benzoin ethyl ether, benzoin isopropyl ether, benzoin isobutyl ether, acetoine, butyroin, toluoin, benzyl, benzophenone, p-methoxybenzophenone, 2, 2-diethoxyacetophenone, $\alpha$, $\alpha$-dimethoxy-$\alpha$-phenylacetophenone, methyl phenylglyoxylate, ethyl phenylglyoxylate, 4, 4'-bis(dimethylamino)benzophenone, 1-hydroxy-cyclohexyl-phenyl-ketone, and 2-hydroxy-2-methyl-1-phenylpropane-1-on; sulfur compounds such as tetramethylthiuram monosulfide and tetramethylthiuram disulfide; and phosphorus compounds such as 2, 4, 6-trimethylbenzoyl diphenylphosphine oxide, bis(2, 4, 6-trimethylbenzoyl)-phenylphosphine oxide, and benzoyl diethoxyphosphine oxide.

The amount of the active energy ray-decomposable polymerization initiator to be added is preferably 0.1 part by mass or more per 100 parts by mass of the ultraviolet ray-curable mixture from the viewpoint of curability by irradiation with ultraviolet rays and is preferably 10 parts by mass or less from the viewpoint of maintenance of good color tone of the hard coat layer. In addition, two or more active energy ray-decomposable polymerization initiators may be jointly used.

Various components such as slip agent, leveling agent, inorganic fine particles, light stabilizer (such as ultraviolet rays absorber or HALS) can be added to the ultraviolet ray-curable mixture, if necessary. The amount of addition thereof is preferably 10 parts by mass or less per 100 parts by mass of the ultraviolet ray-curable mixture from the viewpoint of transparency of the laminate.

The thickness of the hard coat layer is preferably 0.5 to 30 $\mu$m and more preferably 1 to 15 $\mu$m. When the thickness is in this range, the laminate has a sufficient surface hardness and warp of the laminate film caused by the coated layer is small and appearance is good.

The method for forming the hard coat layer is not particularly limited. For example, a casting method, roll coating method, bar coating method, spray coating method, air knife coating method, spin coating method, flow coating method, curtain coating method, film covering method, and dipping method can be used.

In the next place, an anti-glare layer having an anti-glare function will be explained in detail. The anti-glare function is a function to suppress reflection of surrounding lights by diffuse reflection of the surrounding lights by use of fine roughness and/or internal scattering of the surface. A laminate having an anti-glare layer made from fine roughness on the surface of a resin substrate can be obtained as follows: the ultraviolet ray-curable mixture which forms, for example, the aforementioned hard coat layer is coated on a film transmissive to the active energy ray and having a desired fine roughness, and the ultraviolet ray-curable mixture is cured, and thus a cured coat layer is formed; then the cured coat layer is integrated with a resin substrate, and the film is detached from the cured coat layer at the interface having the fine roughness. In the case when the film is difficult to detach from the cured coat layer at the interface having the fine roughness, it is possible to apply a method of forming a release layer on the surface of the fine roughness to the extent that it does not change the fine roughness, a method of adding a release agent to the resin which forms the fine roughness, a method of adding a release agent to the cured coat layer, or the like.

In addition, it is possible to form an anti-glare layer having an internal scattering function by adding fine particles with a light scattering property to the ultraviolet ray-curable mixture.

As the method for producing fine roughness, a method of providing roughness to the film transmissive to the active energy ray in itself, a method of providing roughness on the surface of a flat film transmissive to the active energy ray by coating or transfer with a mold, and the like can be recited. As the method of providing roughness to the film transmissive to the active energy ray in itself, a method of kneading particles in a resin composing the film, a method of heating a resin composing the film to the glass transition temperature of the resin or higher and then transferring a mold shape having fine roughness to the resin while the resin is melted by heat, and the like can be recited, though the method for producing fine roughness is not limited to these methods.

As the method for providing roughness on the surface of a flat base material film, a method of applying an anti-glare coating agent, a method of pouring a light curable resin into a gap between a base material film and a mold having fine roughness followed by curing of the light curable resin by irradiation with the light, and then the light curable resin is detached from the mold (2P method), and the like can be recited, though the method for providing roughness on the surface of a flat base material film is not limited to these methods.

As the method for producing a mold having fine roughness, sand blast, chemical etching, lithography, and the like can be recited. The mold preferably has a roll shape from the viewpoint of good productivity.

In the next place, a dirt-prevention layer having a dirt-prevention function will be explained in detail. The dirt-prevention function may be water-repellent or oil-repellent, or may be hydrophilic or lipophilic. However, the dirt-prevention function is preferably water-repellent from the viewpoint of easiness for removing dirt. The water-repellent layer is preferably made from the ultraviolet ray-curable mixture containing the aforementioned compound having at least two (meth)acryloyloxy groups in the molecule, a (meth)acrylate compound having a fluorine atom, and an active energy ray-decomposable polymerization initiator from the viewpoint of productivity.

The (meth)acrylate compound having a fluorine atom is an important component for realizing water-repellent, oil-repellent, and dirt-prevention properties of the water-repellent layer. The (meth)acrylate compound having a fluorine atom is not particularly limited and a conventional (meth)acrylate compound having a fluorine atom can be used. Examples of the (meth)acrylate compound having a fluorine atom on the market include "Biscoat 17F" (trade name) as heptadecan fluorodecyl acrylate manufactured by Osaka Organic Chemical Industry Ltd., "light acrylate FA-108" (trade name) as perfluorooctyl ethyl acrylate manufactured by Kyoeisha Chemical Co., Ltd., and "16-FDA" (trade name) as 1, 10-bis (meth)acryloyloxy-2, 2, 3, 3, 4, 4, 5, 5, 6, 6, 7, 7, 8, 8, 9, 9-hexadecafluorodecane manufactured by Kyoeisha Chemical Co., Ltd. As the (meth)acrylate compound having a fluorine atom, (meth)acrylate having a perfluoropolyether group is preferable from the viewpoint of good water-repellent and oil-repellent properties of the water-repellent layer. Examples of the (meth)acrylate having a perfluoropolyether group on the market include "Optool DAC" (trade name) manufactured by Daikin Industries, Ltd. and "EXP RS-503" and "EXP RS-751-k" (trade name) manufactured by DIC Corporation.

The (meth)acrylate compound having a fluorine atom can be used alone or in a combination of two or more kinds thereof.

The amount of the (meth)acrylate compound having a fluorine atom to be added is preferably 0.1 to 2 parts by mass per 100 parts of the compound having at least two (meth)acryloyloxy groups in the molecule. When the amount of the (meth)acrylate compound having a fluorine atom is 0.1 part by mass or more, sufficient water-repellent and oil-repellent properties of the water-repellent layer can be realized. In addition, when the amount of the (meth)acrylate compound having a fluorine atom is 2 parts by mass or less, good curability and transparency of the water-repellent layer can be obtained.

The amount of the active energy ray-decomposable polymerization initiator to be added is preferably 0.1 to 10 parts by mass per 100 parts of the compound having at least two (meth)acryloyloxy groups in the molecule.

The thickness of the water-repellent layer is preferably 0.1 to 15 $\mu$m and more preferably 1 to 10 $\mu$m. When the thickness is in this range, the laminate has sufficient surface hardness and transparency and warp of the laminate film caused by the coated layer is small and appearance is good.

Generally, the (meth)acrylate compound having a fluorine atom in the ultraviolet ray-curable mixture has a low surface tension and tends to gather at the interface with air which has a low surface tension rather than at the interface with the film transmissive to the active energy ray which has a relatively high surface tension. Therefore, when the water-repellent layer is transferred, the (meth)acrylate compound having a fluorine atom comes to exist more at the resin substrate side, and thus the water-repellent property of the water-repellent layer in the surface layer of a thus obtained resin laminate becomes insufficient.

In order to gather the (meth)acrylate compound having a fluorine atom at the interface of the film transmissive to the active energy ray and the resin laminate, it is preferable to form a thin layer having a fluorine atom on the film transmissive to the active energy ray and to form the water-repellent layer thereon. The thin layer having a fluorine atom is obtained by application of a conventional fluorine-containing coating material which contains a fluorine-containing compound and an organic solvent followed by evaporation the organic solvent.

As the fluorine-containing compound, a fluorine-containing compound to be expressed by the following general formula (I) is preferable from the viewpoint of formation a thin layer having a low surface tension.

Rf-Si-(O-R)$_3$     (I)

In formula (I), Rf represents an organic functional group having a fluorine atom and R represents an alkyl group having 1 to 3 carbon atoms.

The fluorine-containing compound contained in the fluorine-containing coating material to be used in the present invention is a component for forming a thin layer that is described later having a low surface tension and excellent water-repellent and oil-repellent properties on the surface of the film.

The fluorine-containing compound has Rf which is an organic functional group having a fluorine atom, and Rf is preferably a perfluoroalkyl group or a perfluoropolyether group from the viewpoints of excellent water-repellent and oil-repellent properties of the thin layer and good adhesion with the film. R represents an alkyl group having 1 to 3 carbon atoms.

The fluorine-containing compound may be used alone or in a combination of two or more kinds thereof.

The thickness of the thin layer is preferably 2 to 20 nm and more preferably 5 to 15 nm. When the thickness is in this range the thin layer having a good appearance and excellent water-repellent and oil-repellent properties.

It is preferable that the fluorine-containing compound be contained in the fluorine-containing coating material in an amount of 0.02 to 0.2% by mass in order to obtain excellent water-repellent and oil-repellent properties of the thin layer.

The organic solvent contained in the fluorine-containing coating material is excellent in compatibility with the fluorine-containing compound and is used for adjustment of viscosity and drying speed of the fluorine-containing coating material and the thickness of the thin layer. Examples of the organic solvent include non-fluorine solvents such as hydrocarbon solvents and fluorine-containing solvents, and the fluorine-containing solvents are preferable from the viewpoint of excellent compatibility with the fluorine-containing compound.

Examples of the non-fluorine solvents include ketones such as methyl ethyl ketone, acetone, and methyl isobutyl ketone; alcohols like monovalent alcohols such as ethanol, 1-propanol, 2-propanol, butanol, and 1-methoxy-2-propanol and polyhydric alcohols such as ethylene glycol, diethylene glycol, and propylene glycol; esters such as ethyl acetate, butyl acetate, and γ-butyrolactone; ethers such as diethylene glycol monomethyl ether, diethylene glycol monomethyl ether acetate, tetrahydrofurane, and 1, 4-dioxane; aromatic hydrocarbons such as toluene and xylene; and amides such as dimethylformamide, dimethylacetoamide, and N-methylpyrrolidone.

Examples of the fluorine-containing solvents include fluorine-containing alcohols, fluorine-containing ethers, and ditrifluoromethylbenzene.

Specific examples the fluorine-containing alcohols include compounds expressed by the following chemical formulae: $H(CF_2)_v(CH_2)_w\text{-}OH$; $F(CF_2)_v(CH_2)_w\text{-}OH$; $F(CF_2)_vCH=CHCH_2OH$; and $F(CF_2)_vCH_2CH(I)CH_2OH$. In the above formulae, v and w respectively and independently represent integer of 1 to 8.

Examples of the fluorine-containing ethers include compounds expressed by the formula $R_{21}\text{-}O\text{-}R_{22}$ In the above formula, $R_{21}$ and $R_{22}$ respectively and independently represent a straight chain or branched chain alkyl group having 1 to 10 carbon atoms and at least one of $R_{21}$ and $R_{22}$ contains a fluorine atom.

Specific examples of the fluorine-containing ethers include hydro fluoro alkyl ether. In addition, examples of the fluorine-containing ethers on the market include "HFE-7100" and "HFE-7200" (both, trade names) manufactured by Sumitomo 3M Limited.

As ditrifluoromethylbenzene, o-ditrifluoromethylbenzene, m-ditrifluoromethylbenzene, p-ditrifluoromethylbenzene, and a mixture thereof can be recited.

The organic solvent may be used alone or in a combination or two or more kinds thereof.

The fluorine-containing coating material to be used in the present invention contains the fluorine-containing compound and the organic solvent and may be obtained by a method of mixing necessary amounts of the fluorine-containing compound and the organic solvent or a method of using materials on the market, in which the fluorine-containing compound and the organic solvent have already been mixed.

Examples of the fluorine-containing coating material on the market include "Fluorosurf FG5010" (trade name) manufactured by Fluoro Technology Co., Ltd., "Optool DSX" and "Optool AES-4" (both, trade names) manufactured by Daikin Industries, Ltd., and "NovecEGC-1720" (trade name) manufactured by Sumitomo 3M Limited. When these materials on the market are used, an organic solvent can be properly added so as to make the content of the fluorine-containing compound become a proper value.

The method of coating the fluorine-containing coating material on the surface of the film is not particularly limited. For example, a casting method, roll coating method, bar coating method, spray coating method, air knife coating method, spin coating method, flow coating method, curtain coating method, and dipping method can be recited.

In the present invention, the thin layer can be obtained by application of the fluorine-containing coating material on the film followed by drying treatment by way of evaporation of the organic solvent.

The (meth)acrylate compound having a fluorine atom contained in the ultraviolet ray-curable mixture tends to gather at the surface on the thin layer side of the coat of the ultraviolet ray-curable mixture because the thin layer thus obtained has a low surface tension and excellent water-repellent and oil-repellent properties, and thus water-repellent property of the water-repellent layer on the resin laminate to be obtained is improved. The contact angle of the surface of the water-repellent layer on the resin laminate against water is preferably 100 degrees or more and more preferably 105 degrees or more.

The method for coating the aforementioned ultraviolet ray-curable mixture containing the (meth)acrylate compound having a fluorine atom on the thin layer formed on the film transmissive to the active energy ray is not particularly limited, and for example, a casting method, roll coating method, bar coating method, spray coating method, air knife coating method, spin coating method, flow coating method, curtain coating method, film covering method, and dipping method can be recited.

The thin layer has a low surface tension and is easy to repel the ultraviolet ray-curable mixture at the time of coating, it is preferable to use the film covering method. In addition, the curing is carried out in an anaerobic atmosphere, so that polymerization can not be inhibited by air and the like and abrasion resistance of the water-repellent layer can be improved. In addition, it is possible to avoid entrainment of foams and dirt which may cause poor finish.

These curable compounds are cured by irradiation with an active energy ray such as electron beam, radioactive ray, or ultraviolet ray.

Hereinafter, one embodiment of the production of a laminate film by the film covering method will be explained. Firstly, the fluorine-containing coating material is coated on the film transmissive to the active energy ray and dried, and the thin layer is formed, and then the ultraviolet ray-curable mixture containing the (meth)acrylate compound having a fluorine atom is coated on the thin layer. Secondly, an arbitrary surface of a film transmissive to the active energy ray, which is a cover film, and the surface of the film transmissive to the active energy ray on which the ultraviolet ray-curable mixture has been coated are arranged at positions facing each other and press-contacted with a press roll, and a laminate in which the film transmissive to the active energy ray, the thin layer, the ultraviolet ray-curable mixture, and the cover film are sequentially laminated in this order is formed. Then, the laminate is irradiated with ultraviolet rays from the cover film side through the cover film by use of an active energy ray-irradiation device, and the ultraviolet ray-curable mixture is cured. In the present invention, it is preferable to provide a retention time between the formation of the above-mentioned laminate and the irradiation with the active energy ray. The retention time is preferably 0.5 to 5 minutes taking into consideration of transference of the (meth)acrylate compound having a fluorine atom toward the thin layer side through the ultraviolet ray-curable mixture. After the ultraviolet ray-curable mixture is cured, the cover film is detached. In this way, the laminate film in which the thin layer obtained by drying of the fluorine-containing coating material and the detachable water-repellent layer are laminated on the film transmissive to the active energy ray can be obtained.

In the next place, an anti-static layer having an anti-static function will be explained in detail. The anti-static layer is preferably made from the aforementioned compound having at least two (meth)acryloyloxy groups in the molecule, an anti-static component, and an active energy ray-decomposable polymerization initiator from the viewpoint of productivity.

As the anti-static component, an electron-conductive organic compound or conductive particles, or an ion-conductive organic compound can be recited, and the electron-conductive anti-static component such as $\pi$-conjugated conductive organic compound or conductive particles is preferable because a conductive property thereof is hardly affected by changes in the environment and stable, and in particular, a good conductive property is realized even in a low humidity environment.

Examples of the $\pi$-conjugated conductive organic compound include polyacetylene as an aliphatic conjugated system, poly(paraphenylene) as an aromatic conjugated system, polypyrrole or polythiophene as a heterocyclic conjugated system, polyaniline as a heteroatom-containing conjugated system, and poly(phenylene vinylene) as a mixed conjugated system. In particular, polythiophene conductive polymer is preferable.

Examples of the conductive particles include carbon particles, metal particles, metal oxide particles, and coated conductive fine particles.

Examples of the carbon particles include carbon powder such as carbon black, ketjen black, and acetylene black; carbon fiber such as PAN-based carbon fiber and pitch-based carbon fiber; and carbon flake as crashed expanded graphite.

Examples of the metal particles include powders of metals such as aluminum, copper, gold, silver, nickel, chromium, molybdenum, titanium, tungsten, and tantalum; powders of alloys containing these metals; metal flakes; and metal fibers of iron, copper, stainless steel, silver-plated copper, and brass.

Examples of the metal oxide particles include tin oxide, antimony-doped tin oxide (ATO), indium oxide, tin-doped indium oxide (ITO), zinc oxide, aluminum-doped zinc oxide, zinc antimonate, and antimony pentoxide.

Examples of the coated conductive fine particles include conductive fine particles in which surfaces of various fine particles such as fine particles of titanium oxide (spherical or needle like), potassium titanate, aluminum boronate, barium sulfate, mica, and silica are coated with anti-static components such as tin oxide, ATO, and ITO; and resin beads such as polystyrene, acrylic resin, epoxy resin, polyamide, and polyurethane subjected to surface treatment with a metal such as gold and/or nickel.

As the conductive particles, metal fine particles (in particular, gold, silver, silver/palladium alloy, copper, nickel, and aluminum) and metal oxide fine particles (in particular, tin oxide, ATO, ITO, zinc oxide, aluminum-doped zinc oxide are preferable. In particular, an electron-conductive anti-static component such as metal or metal oxide is preferable, and among them, metal oxide fine particles are particularly preferable, and it is preferable to use at least one of the above-mentioned metal oxide fine particles.

A mass average particle diameter of primary particles of the anti-static component is preferably 1 to 200 $\mu$m and more preferably 1 to 150 $\mu$m, particularly preferably 1 to 100 $\mu$m, and the most preferably 1 to 80 $\mu$m. The average particle diameter can be measured with a light scattering method or electron micrograph images.

The amount of the active energy ray-decomposable polymerization initiator to be added is preferably 0.1 part by mass or more per 100 parts by mass of the ultraviolet ray-curable mixture from the viewpoint of curability by irradiation with ultraviolet rays and is preferably 10 parts by mass or less from the viewpoint of maintenance of good color tone of the anti-static layer.

Various components such as slip agent, leveling agent, inorganic fine particles, light stabilizer (such as ultraviolet rays absorber or HALS) can be added to the ultraviolet ray-curable mixture, if necessary. The amount of addition thereof is preferably 10 parts by mass or less per 100 parts by mass of the ultraviolet ray-curable mixture from the viewpoint of transparency of the laminate.

The thickness of the anti-static layer is preferably 0.1 to 10 $\mu$m and more preferably 0.5 to 7 $\mu$m. When the thickness is in this range, the laminate has a sufficient surface hardness, anti-static function, and transparency, and warp of the laminate film caused by the coated layer is small and appearance is good.

A surface resistivity of the anti-static layer is preferably $10^{10}\Omega/\square$ or less and more preferably $10^{8}\Omega/\square$ or less. When the surface resistivity is in this range, anti-static function of the laminate becomes sufficient.

The method for forming the anti-static layer is not particularly limited. For example, a casting method, roll coating method, bar coating method, spray coating method, air knife coating method, spin coating method, flow coating method, curtain coating method, film covering method, and dipping method can be recited.

These curable compounds are cured by irradiation with an active energy ray such as electron beam, radioactive ray, or ultraviolet ray.

It is also preferable to use a film, on the functional layer of which an adhesion layer is formed. Examples of the adhesion layer include thermoplastic resins such as an acrylic resin, chlorinated olefin resin, vinyl chloride-vinyl acetate copolymer resin, maleic acid based resin, chlorinated rubber resin, cyclized rubber resin, polyamide resin, coumarone-indene resin, ethylene-vinyl acetate copolymer resin, polyester resin, polyurethane resin, styrene resin, butyral resin, rosin resin, and epoxy resin. It is preferable to use a combination of a polyamide resin and at least one of a butyral resin, rosin resin, and epoxy resin. Or it is possible to use a combination of a polyurethane resin and at least one of a butyral resin, rosin resin, and epoxy resin, or a combination of a mixture of polyamide resin with a polyurethane resin and at least one of a butyral resin, rosin resin, and epoxy resin. In any case, it is possible to obtain an adhesion layer capable of realizing good adhesion even at a low temperature. As a method for forming the adhesion layer, a conventional method can be used.

When the adhesion layer is made from a thermoplastic resin, it is suitable for continuous production and productivity is good because the adhesion layer does not have a tack property on the surface and the transfer film that is described later can be kept in a roll shape

The method for forming the adhesion layer is not particularly limited. For example, a casting method, roll coating method, bar coating method, spray coating method, air knife coating method, spin coating method, flow coating method, curtain coating method, film covering method, and dipping method can be recited.

As for a heat shrinkage factor of the acrylic resin sheet to be obtained by the present invention, both a heat shrinkage factor in a sheet transfer direction and a heat shrinkage factor in a direction orthogonal to the sheet transfer direction are preferably 1.4% or less and more preferably 1.0% or less, wherein the heat shrinkage factor is calculated from change of a length of the sheet between before and after a heat treatment at 120°C for 120 minutes. When the heat shrinkage factor is 1.4% or less, the dimension of the sheet can be kept against the heat generating at the time of processing the sheet and thus the sheet is preferable for faceplates of displays. Therefore, change in dimensional precision or amount of warp caused by various heat histories over the period of various stages from cutting and printing to finishing in the processing step of the resin sheet can be suppressed at a low level.

As mentioned above, the acrylic resin sheet obtained by the present invention has high transparency, excellent appearance (small optical strain), and high thermal resistance, and the laminate in which the functional layer is laminated also has excellent anti-reflection function, hard coat function, anti-static function, and dirt-prevention function, so that it is suitable for faceplates of displays, namely, transparent resin sheets for protecting surfaces of liquid crystal panels represented by mobile phones, portable game machines, car navigation systems, and portable AV appliances.

EXAMPLES

Hereinafter, the present invention will be explained in detail with reference to examples. In the following description, "part" means "part by mass" and "%" means "% by mass", unless otherwise specified.

<Weight average molecular weight of a polymer>

A weight average molecular weight of a polymer contained in the active energy ray-polymerizable viscous liquid was measured by the following method. Tetrahydrofuran (THF) was added to beads of the polymer, and the resulting mixture was left to stand overnight for dissolution and measured with a liquid chromatograph HCL-8020 manufactured by Tosoh Corporation. The used condition is shown below. Separation column system: two of TSK-Gel GMHXL manufactured by Tosoh Corporation set in series; solvent: THF; flow rate: 1.0 ml/min; detector: differential refractive index detector; measurement temperature: 40°C; and injection amount: 0.1 ml. Methacrylic resin was used as a standard polymer.

<Content of polymer>

The content of polymer is a proportion of polymer contained in the active energy ray-polymerizable viscous liquid expressed in % by mass.

<Amount of initiator>

The amount of initiator is an amount of the active energy ray-decomposable polymerization initiator contained in the active energy ray-polymerizable viscous liquid expressed in part by mass, provided that the sum of a monomer and a polymer in the active energy ray-polymerizable viscous liquid is 100 parts by mass.

<Viscosity>

Viscosity of each active energy ray-polymerizable viscous liquid at 20°C was measured with B-type viscometer and the results were shown. Specifically, a digital viscometer LVDV-II + Pro manufactured by Brookfield Engineering Laboratories, Inc. was used, and two kinds of spindles, S63 and S64, were properly used depending on the viscosity of the sample, and revolution speed was 0.3 to 100 rpm. In this case, the maximum measurable viscosity is 2 million Pa·s.

<Peak time of polymerization>

As the peak time of polymerization, the time taken to proceed from the irradiation on the active energy ray-polymerizable viscous liquid with the active energy ray to the detection of temperature peak caused by exothermic heat of polymerization was expressed in the unit of minute. Although the actual time taken for the active energy ray-polymerizable viscous liquid to be transformed into the resin sheet was the time taken to proceed from the irradiation with the active energy ray to the end of heat treatment, the time taken to proceed until the temperature peak of polymerization substantially affected the production time because the heat treatment step took the same time in any conditions, and the process from the detection of the temperature peak of polymerization to the end of the heat treatment could not be shortened since the amount of monomer was large before the detection of the temperature peak of polymerization and if the heat treatment was carried out at this stage, a resin sheet entraining a lot of foams therein was obtained because of boiling of the monomer, and hence the peak time of polymerization was used as the base of comparison of the production time.

<Appearance of a resin sheet>

Roughness of the obtained resin sheet was evaluated by visual inspection as follows, without consideration of yellowness of the resin sheet.

"◎" : Lowering of thickness of the sheet at the edge is small, roughness of the film surface is small, and appearance is good.
"○" : Lowering of thickness of the sheet at the edge is observed to a minor extent and appearance is good.
"×" : Lowering of thickness of the sheet at the edge is caused by draining of the viscous liquid and roughness of the film surface is observed.
"xx" : Roughness of the film surface is large because of drying of the liquid surface at the supply port.

<Yellowness index>

Yellowness index YI, as specified in JIS K7105, measurement condition (b), was measured for 3 samples and the average value was taken as the yellowness index.

<Vicat softening temperature>

Vicat softening temperature, as specified in JIS K7206, B-50 method, was measured 3 times for each sample, and the average value was taken as the vicat softening temperature.

<Measurement of heat shrinkage factor>

Heat shrinkage factor of the resin sheet is an amount of shrinkage of the resin sheet expressed in percent caused between before and after a heat treatment, and is affected by thermal resistance of the resin sheet or stress at the time of production of the resin sheet, and is important as an index of dimensional precision against heat history in the case of sheets for protecting displays of mobile phones and the like. The following method was carried out for measurement of the amount of shrinkage of the order of micrometer. From the transparent resin sheet product, an 80 $\times$ 80 mm square sheet having two sides thereof in a sheet transfer direction and in a direction orthogonal to the sheet transfer direction (a width direction), respectively, was cut out, and 4 cross marks were written thereon by an oil-based ink in such a way that 2 marks were placed about 60 mm apart from each other passing through the center of the sheet in the sheet transfer direction and other 2 marks were placed in the same manner as above in the width direction, as shown in Figure 3. Numbers (1) to (4) were put on these marks as shown in Figure 3, and the length between (1) and (3), and the length between (2) and (4) were measured 3 times each, by New View 6300 manufactured by Zygo K.K. Subsequently, an 100 $\times$ 100 mm square glass plate having a thickness of 5 mm, with a cotton cloth (canequim) being covered on the glass plate for protection against adhesion of a sample, was left to stand for 30 minutes in a dryer set at 120°C so that the temperature of the glass plate becomes constant at 120°C, and then the aforementioned sample after the measurement was placed on the cloth and heated for 120 minutes. After the heating, the sample was cooled to 40°C over the period of 30 minutes, and the length between (1) and (3) and the length between (2) and (4) were measured again 3 times each. The difference between respective average values before and after the heat treatment was calculated, with the shrunk value being treated as a positive, and divided by the original length, and the heat shrinkage factor was expressed in percent. In this case, the difference between the maximum and minimum values of lengths in the 3 measurements at the same position and condition was not more than 10 $\mu$m and it was a measurement error of not more than 0.017% in the measurement length of 60 mm.

<Total light transmittance and Haze>

Total light transmittance was measured in accordance with a method described in JIS K7361-1, and haze was measured in accordance with a method described in JIS K7136, by use of HAZE METER NDH2000 (trade name), manufactured by Nippon Denshoku Industries Co., Ltd.

<Abrasion resistance>

Evaluation was carried out by use of difference ($\Delta$ haze) between haze values before and after the abrasion test. Namely, a circular pad having a diameter of 25.4 mm, equipped with # 000 steel wool was put on the surface of the hard coat layer of a laminate, and allowed to reciprocate 10 times over a distance of 20 mm under the load of 500 g for abrasion. The difference between haze values before and after the abrasion was obtained in accordance with the following equation (A).

$$[\Delta \text{ haze (\%)}] = [\text{haze value after abrasion (\%)}] - [\text{haze value before abrasion (\%)}] \quad (A)$$

In addition, the number of scars on the sample after the test was counted.

<Evaluation of anti-reflection function>

The rear surface of a resin sheet was roughened by an abrasive paper and an anti-glare black spray was coated thereon, and the sample was made. The reflection rate of the sample surface was measured in accordance with a method described in JIS R3106 by use of a spectrophotometer ("U-4000" manufactured by Hitachi, Ltd.) with a condition of an incidence angle of 5 degree and a wave length in the range of 380 to 780 nm.

<Evaluation of adhesion>

A cross cut test (JIS K5600-5-6) was used for evaluation. The number of the portions of the coat that have not been detached out of 100 portions was shown.

<Evaluation of warp of the resin laminate>

The amount of warp of a resin laminate having the size of 30 cm × 30 cm was measured after the laminate was left to stand under an environment of 80°C for 15 hours. Note that, the amount of warp was measured in such a way that a sample was put on a flat plate and distance from the flat plate to the sample was measured.

"○" : Amount of warp is 5 mm or less.
"×" : Amount of warp is more than 5 mm.

<Contact angle>

(a) Contact angle against water

On a water-repellent layer on a resin laminate, 0.2 μl of pure water was dropped in one drop under the environment of a temperature of 23°C and a relative humidity of 50%, and a contact angle between water and the water-repellent layer was measured by use of a portable contact angle meter ("PG-X" (trade name) manufactured by Fibro system ab), and a contact angle against water was obtained.

(b) Contact angle against triolein

The same procedure as in the evaluation of contact angle against water was carried out except that triolein was used instead of pure water, and a contact angle between triolein and the water-repellent layer on a resin laminate was measured and a contact angle against triolein was obtained.

<Oil-based ink wipe-off property>

Lines were drawn on a cured layer surface by an oil-based ink (black) "My Name" ((trade name) manufactured by Sakura Color Products Corp.), and 3 minutes later, the lines were wiped off by "Kimtowel"((trade name) manufactured by Nippon Paper Crecia Co., Ltd.), and the extent to which the ink was wiped off was evaluated by visual inspection based on the following criteria.

"○": The lines were perfectly wiped off by 5 times of wiping.
"Δ": The lines remain slightly by 5 times of wiping.
"×" : The lines remain partly or entirely by 5 times of wiping.

<Evaluation of anti-static function>

The anti-static function was evaluated from a surface resistivity value. The surface resistivity ($\Omega/\square$) on the laminated layer side of a resin laminate 1 minute after a voltage of 500 V was applied was measured with an ultra insulation resistance meter (ULTRA MEGOHMMETER MODEL SM-10E manufactured by TOA Electric Industrial Co., Ltd.) under the condition of a measurement temperature of 23°C and a relative humidity of 50%. As a sample for the measurement, the one which had been humidity-controlled previously under the environment of a temperature of 23°C and a relative humidity of 50% for one day was used.

<Method for measuring a layer thickness>

A sample having a thickness of 100 nm was cut out with a microtome and observed with a transmission electron microscope. As the transmission electron microscope, JEM-1010 manufactured by JEOL Ltd. (JEOL) was used.

Example 1

To 60 parts of methyl methacrylate monomer, 0.3 part of 1-hydroxy-cyclohexyl-phenyl ketone (Irgacure 184 manufactured by Ciba Specialty Chemicals, Inc.) as an ultraviolet ray-decomposable polymerization initiator, and 0.05 part of sodium dioctylsulfosuccinate (Aerosol OT-100 manufactured by Mitsui-Cyanamid, Ltd.) as a release agent were added and dissolved at a normal temperature, and then 40 parts of methyl methacrylate polymer beads (BR-83 manufactured by Mitsubishi Rayon Co., Ltd.; having weight average molecular weight of 40,000) were dissolved therein by heating over the period of 30 minutes at 80°C, and thus an ultraviolet ray-polymerizable viscous liquid (polymer content being 39.9%) was prepared. The liquid was left to stand for 2 hours at 50°C in order to remove foams formed at the time of preparation and then cooled to a normal temperature.

The same production system as shown in Figure 1 was used, wherein a stainless steel endless belt having a width of 500 mm as an endless belt 3, polyethylene terephthalate film having a width of 450 mm and a thickness of 188 $\mu$m (Cosmoshine A41 00 manufactured by Toyobo Co., Ltd.) as a film transmissive to ultraviolet ray, FL30S-BL lamp manufactured by Toshiba Corporation as an ultraviolet ray-irradiation device 4, and hot air heating devices as a former stage-heating mechanism 9 and a latter stage-heating mechanism 10 were used.

The transfer rate of the endless belt 3 is set to 1.5 m/min, and the ultraviolet ray-polymerizable viscous liquid 2 prepared previously was supplied thereto in a sheet shape having a width of 400 mm and a thickness of 1 mm from a supply die 1, and then the film transmissive to ultraviolet ray 5 was laminated thereon.

Subsequently, the temperature of the liquid 2 before ultraviolet ray irradiation was adjusted to 60°C by the former stage-heating mechanism, and the liquid 2 was irradiated with the ultraviolet ray from the ultraviolet ray-irradiation device 4 with an intensity of irradiation of 5 mW/cm$^2$ for 10 minutes, and subjected to heat treatment at 130°C for 5 minutes by the latter stage-heating mechanism 10, and then cooled to 90°C by air, and a transparent resin sheet 2' was detached from the film transmissive to ultraviolet ray 5 and the endless belt 3. The thus obtained transparent resin sheet had somewhat thin parts at the edge because the liquid 2 drained before the ultraviolet ray irradiation, but, except the edge parts, the resin sheet had flat surface and good appearance on both sides. In this case, the internal temperature of the ultraviolet ray-polymerizable viscous liquid in the section of ultraviolet ray irradiation was measured and a temperature peak caused by exothermic heat of polymerization was detected at 3.8 minutes after the start of the irradiation.

Example 2

The same procedure as in Example 1 was carried out except that 65 parts of methyl methacrylate monomer and 35 parts of methyl methacrylate polymer beads (BR-80 manufactured by Mitsubishi Rayon Co., Ltd.; having weight average molecular weight of 100,000) were used (polymer content being 34.9%), and a resin sheet was obtained. In this case, there were almost no thin parts even at the edges because the viscosity of the active energy ray-polymerizable viscous liquid was in a more preferable range of 10,000 mPa·s or more and thus drain at the edges was suppressed. The temperature peak in the section of ultraviolet ray irradiation was detected at 4.8 minutes after the start of the irradiation.

Example 3

The same procedure as in Example 2 was carried out except that EGT-061-C1 manufactured by Eye Graphics Co., Ltd. was used as the ultraviolet ray-irradiation device and irradiation with the ultraviolet ray was carried out at 120 W/cm with an intensity of irradiation which corresponded to 2 J/cm$^2$ in 0.5 minutes (an intensity of irradiation of 67 mW/cm$^2$) for 6 minutes, and a resin sheet was obtained. In this case, detection of the temperature peak in the section of ultraviolet ray irradiation was shortened to 4.0 minutes, but a certain amount of yellowness was observed when the resin sheet was viewed from the edges because the intensity of irradiation of the ultraviolet ray was strong. The yellowness observed was not a serious level when the resin sheet was viewed from the surface and the resin sheet was good as a product.

Example 4

At first, polymer beads were produced by the following method.

Production of an aqueous solution of an anion polymer:

To a polymerization apparatus equipped with a stirrer, a monomer mixture composed of 58 parts of sodium 2-sulfoethyl methacrylate, 31 parts of an aqueous solution of potassium methacrylate (30 parts of potassium methacrylate), and 11 parts of methyl methacrylate, and 900 parts of pure water were added and the resulting mixture was stirred and dissolved. Subsequently, the mixture was heated to 60°C while stirred under a nitrogen atmosphere, and maintained at 60°C while stirred for 6 hours and an aqueous solution of an anion polymer was obtained. In this case, after the temperature reached at 50°C, 0.1 part of ammonium persulfate as a polymerization initiator was added, and further, 11 parts of methyl methacrylate separately measured was continuously dropped in the above-mentioned reaction system over the period of 75 minutes.

Production of copolymer beads:

To the first vessel equipped with a stirrer, a monomer mixture composed of 97 parts of methyl methacrylate and 3 parts of methyl acrylate, 0.1 part of 2, 2'-azobis(isobutylonitrile) as a polymerization initiator and 0.11 part of n-octyl mercaptan as a chain transfer agent were charged, and the mixture was stirred and mixed.

In addition, to the second vessel equipped with a stirrer, 150 parts of deionized water, 0.3 part of the aqueous solution of an anion polymer obtained in the above method as a dispersion stabilizer and 0.35 part of sodium sulfate as an aid for dispersion stabilizer were charged, and the mixture was stirred and mixed.

To a polymerization vessel equipped with a stirrer, the contents of the first vessel obtained above (all amount) and the contents of the second vessel obtained above (all amount) were charged, respectively, and the system was substituted with nitrogen and then heated to 80°C. After the temperature peak of exothermic heat of polymerization was finished, the system was kept at 95°C for 30 minutes, and cooled to 30°C, and the polymerization was completed. Subsequently, washing and dehydration treatment and vacuum drying at 70°C were carried out, and polymer beads having a weight average molecular weight of 180,000 were obtained.

The same procedure as in Example 1 was carried out except that 65 parts of methyl methacrylate monomer and 35 parts of polymer beads produced in the above method were used (polymer content being 34.9%), and a resin sheet was obtained. In this case, the temperature peak in the section of ultraviolet ray irradiation was detected at 4.0 minutes after the start of the irradiation, and a resin sheet having good appearance can be obtained.

Example 5

The same procedure as in Example 1 was carried out except that 77 parts of methyl methacrylate monomer and 23 parts of methyl methacrylate polymer beads (BR-85 manufactured by Mitsubishi Rayon Co., Ltd.; having weight average molecular weight of 300,000) were used (polymer content being 22.9%), and a resin sheet was obtained. In this case, the temperature peak in the section of ultraviolet ray irradiation was detected at 7.0 minutes after the start of the irradiation.

Example 6

The same procedure as in Example 1 was carried out except that 85 parts of methyl methacrylate monomer and 15 parts of methyl methacrylate polymer beads (BR-88 manufactured by Mitsubishi Rayon Co., Ltd.; having weight average molecular weight of 480,000) were used (polymer content being 14.9%), and a resin sheet was obtained. In this case, the temperature peak in the section of ultraviolet ray irradiation was detected at 8.0 minutes after the start of the irradiation.

Example 7

The same procedure as in Example 1 was carried out and the ultraviolet ray-polymerizable viscous liquid (polymer content being 39.9%) was prepared. Then the same procedure as in Example 1 was carried out except that the former stage-heating mechanism was not used and the ultraviolet ray-polymerizable viscous liquid was irradiated with the ultraviolet ray at 20°C, and a resin sheet was obtained. In this case, the temperature peak in the section of ultraviolet ray irradiation was detected at 5.1 minutes after the start of the irradiation. When this case is compared with Example 1 in which the ultraviolet ray-polymerizable viscous liquid was adjusted at 60°C before the irradiation with the ultraviolet ray, detection of the temperature peak was delayed owing to the smaller polymer growth rate, but when compared with a conventional cast process which uses thermal polymerization, this case has a sufficiently fast rate of polymerization. Therefore, it is possible to attain reduction of the production system by removing the former stage-heating mechanism.

Example 8

The same procedure as in Example 2 was carried out except that the ultraviolet ray-polymerizable viscous liquid was irradiated with the ultraviolet ray at 20°C (polymer content being 34.9%), and a resin sheet was obtained. In this case, the temperature peak in the section of ultraviolet ray irradiation was detected at 6.8 minutes after the start of the irradiation.

Example 9

The same procedure as in Example 4 was carried out except that the ultraviolet ray-polymerizable viscous liquid was irradiated with the ultraviolet ray at 20°C (polymer content being 34.9%), and a resin sheet was obtained. In this case, the temperature peak in the section of ultraviolet ray irradiation was detected at 6.1 minutes after the start of the irradiation.

Example 10

To 45 parts of methyl methacrylate monomer, 0.1 part of 1-hydroxy-cyclohexyl-phenyl ketone (Irgacure 184 manufactured by Ciba Specialty Chemicals, Inc.) as an ultraviolet ray-decomposable polymerization initiator, and 0.05 part of sodium dioctylsulfosuccinate as a release agent were added and dissolved at a normal temperature, and then 55 parts of methyl methacrylate polymer beads (BR-83 manufactured by Mitsubishi Rayon Co., Ltd.; having weight average molecular weight of 40,000) were dissolved therein by heating over the period of 45 minutes at 80°C, and thus an ultraviolet ray-polymerizable viscous liquid (polymer content being 54.9%) was prepared. The liquid was left to stand for 4 hours at 50°C in order to remove foams formed at the time of preparation and then cooled to a normal temperature. Then the same procedure as in Example 1 was carried out except that the ultraviolet ray-polymerizable viscous liquid was irradiated with the ultraviolet ray at 20°C, and a resin sheet was obtained. In this case, the temperature peak in the section of ultraviolet ray irradiation was detected at 2.1 minutes after the start of the irradiation. A resin sheet having a good appearance was obtained in a short time, in this case also. Although the pressure necessary for transferring the viscous liquid became higher owing to the increase in the polymer content, the rate of polymerization became very fast and thus downsizing of the production system is possible.

Example 11

The same procedure as in Example 10 was carried out except that 50 parts of methyl methacrylate monomer and 50 parts of methyl methacrylate polymer beads (BR-80 manufactured by Mitsubishi Rayon Co., Ltd.; having weight average molecular weight of 100,000) were used (polymer content being 49.9%), and a resin sheet was obtained. In this case, the temperature peak in the section of ultraviolet ray irradiation was detected at 2.7 minutes after the start of the irradiation.

Example 12

The same procedure as in Example 11 was carried out except that 60 parts of methyl methacrylate monomer, 40 parts of methyl methacrylate polymer beads (BR-85 manufactured by Mitsubishi Rayon Co., Ltd.; having weight average molecular weight of 300,000), and 0.3 part of 1-hydroxy-cyclohexyl-phenyl ketone (Irgacure 184 manufactured by Ciba Specialty Chemicals, Inc.) as an ultraviolet ray-decomposable polymerization initiator were used (polymer content being 39.9%), and a resin sheet was obtained. In this case, the temperature peak in the section of ultraviolet ray irradiation was detected at 3.9 minutes after the start of the irradiation. The rate of polymerization was able to be raised owing to the large content of the polymer having a relatively high molecular weight, and thus the sheet product had a high molecular weight and thus had high thermal resistance, and hence the product sheet having a vicat softening temperature as high as 110.2°C was obtained.

Example 13

The same production system as shown in Figure 2 was used, wherein polyethylene terephthalate film having a width of 500 mm and a thickness of 188 $\mu$m (Cosmoshine A4100 manufactured by Toyobo Co., Ltd.) as first and second films was used, and FL30S-BL lamp manufactured by Toshiba Corporation as ultraviolet ray-irradiation devices 4 were used only on the upper film side, and a hot air heating device as a latter stage-heating mechanism 10 was used.

The transfer rate of the first and second films 13 and 16 is set to 3.0 m/min, and the ultraviolet ray-polymerizable viscous liquid 2 prepared previously was supplied thereto in a sheet shape having a width of 400 mm and a thickness of 1 mm from a supply die 1, and then a film transmissive to ultraviolet ray 5 was laminated thereon.

As for other conditions such as the condition of irradiation with the ultraviolet ray, the same procedure as in Example 8 was carried out (polymer content being 34.9%), and a resin sheet was obtained. In this case, the temperature peak in the section of ultraviolet ray irradiation was detected at 7.0 minutes after the start of the irradiation. Although these conditions were the same as in Example 8 in which the stainless steel endless belt was used, the rate of polymerization became a little slower than that in Example 8 because the ultraviolet ray passed through the liquid 2 reflected from the stainless steel belt located at the lower side and used again in the case of Example 8. Although the polymerization was carried out with both sides of the liquid 2 being laminated by the films, a sheet having good appearance was obtained because the viscosity of the liquid 2 was in a proper range.

Example 14

The same procedure as in Example 13 was carried out except that 77 parts of methyl methacrylate monomer and 23 parts of methyl methacrylate polymer beads (BR-85 manufactured by Mitsubishi Rayon Co., Ltd.; having weight average molecular weight of 300,000) were used (polymer content being 22.9%) and the ultraviolet ray-irradiation devices 4 were used on both film sides, and a resin sheet was obtained. In this case, the temperature peak in the section of ultraviolet ray irradiation was detected at 7.2 minutes after the start of the irradiation.

Example 15

The same procedure as in Example 10 was carried out for preparation of the raw materials (polymer content being 54.9%), and the same procedure as in Example 13, from the irradiation with the ultraviolet ray, was carried out for the devices and the conditions for polymerization and curing, and a resin sheet was obtained. In this case, the temperature peak in the section of ultraviolet ray irradiation was detected at 2.3 minutes after the start of the irradiation.

Example 16

The same procedure as in Example 11 was carried out for preparation of the raw materials (polymer content being 49.9%), and the same procedure as in Example 13, from the irradiation with the ultraviolet ray, was carried out for the devices and the conditions for polymerization and curing, and a resin sheet was obtained. In this case, the temperature peak in the section of ultraviolet ray irradiation was detected at 3.0 minutes after the start of the irradiation.

Example 17

The same procedure as in Example 12 was carried out for preparation of the raw materials (polymer content being 39.9%), and the same procedure as in Example 13, from the irradiation with the ultraviolet ray, was carried out for the devices and the conditions for polymerization and curing, and a resin sheet was obtained. In this case, the temperature peak in the section of ultraviolet ray irradiation was detected at 4.3 minutes after the start of the irradiation.

Example 18

The same procedure as in Example 1 was carried out except that 0.5 part of 1-hydroxy-cyclohexyl-phenyl ketone (Irgacure 184 manufactured by Ciba Specialty Chemicals, Inc.) as an ultraviolet ray-decomposable polymerization initiator was used, and an ultraviolet ray-polymerizable viscous liquid (polymer content being 39.8%) was obtained. An anti-reflective transfer film, STEP PAR-2, manufactured by Oike & Co., Ltd., having a width of 450 mm and a thickness of 188 $\mu$m (a film transmissive to ultraviolet ray, detachable layer, anti-reflection layer, hard coat layer, and adhesion layer being laminated in this order) was used as the film transmissive to ultraviolet ray 5, and was laminated on the ultraviolet ray-polymerizable viscous liquid, with the functional layer side faced to the liquid and with the adhesion layer brought into contact with the liquid. Then the ultraviolet ray-polymerizable viscous liquid was irradiated with the ultraviolet ray at 20°C in the same manner as in Example 7, and a laminate in which the anti-reflection layer is integrated with a resin substrate was made. Subsequently, the anti-reflective laminate was detached from the film transmissive to ultraviolet ray 5' and the endless belt 3. In this case, the film transmissive to ultraviolet ray was detached at the interface of the detachable layer and the anti-reflection layer, and hence the anti-reflective laminate having successively the anti-reflection layer, hard coat layer, adhesion layer, and resin substrate from the product surface side, namely from the air side, was obtained. In this case, a temperature peak caused by exothermic heat of polymerization was detected at 4.9 minutes after the start of the ultraviolet ray irradiation.

The obtained anti-reflective laminate was homogeneous and the surface thereof was flat and good in appearance on both sides. It had total light transmittance of 95% and haze of 0.2, and was excellent in transparency, the increase of haze after abrasion on the anti-reflection layer was 0.1 %, and the number of scars was 3. The minimum reflection rate was 0.2% at the wave length of 580 nm. The evaluation of adhesion was good without any detachment of the coat. The evaluation of warp was good, with the amount of warp being less than 5 mm. The results of functionality are shown in Table 2.

Example 19

The same procedure as in Example 13 was carried out except that preparation of the ultraviolet ray-polymerizable viscous liquid was carried out in the same manner as in Example 18 (polymer content being 39.8%), the ultraviolet ray-irradiation devices shown in Example 13 was used, and the following hard coat transfer film was used on both sides as the first and second films, and a laminate was prepared while the ultraviolet ray-irradiation devices 4 were used only on the upper film side. The evaluation results of the hard coat laminate obtained are shown in Table 3.

On a PET film (AC-J manufactured by Reiko Co., Ltd.) with a melamine detachable layer having a thickness of 100 $\mu$m, a coating material containing an ultraviolet curable mixture containing 40 parts of 1, 6-haxanediol diacrylate (C6DA manufacture by Osaka Organic Chemical Industry Ltd.), 60 parts of pentaerythritol triacrylate (M305 manufactured by Toagosei Co., Ltd.), and 4 parts of 1-hydroxy-cyclohexyl-phenyl ketone (Irgacure 184 manufactured by Ciba Specialty Chemicals, Inc.) was coated by use of a bar coater No. 4. Subsequently, the resulting film was passed under a 9.6 kW-high pressure mercury lamp at a position 20 cm apart from the lamp with a speed of 2.5 m/min, and a hard coat layer was formed, and thus a hard coat transfer film was obtained.

Example 20

The same procedure as in Example 18 was carried out except that the following anti-static transfer film was used instead of the anti-reflective transfer film, and a laminate was prepared. The evaluation results of the anti-static laminate obtained are shown in Table 4.

On a PET film (AC-J manufactured by Reiko Co., Ltd.) with a melamine detachable layer having a thickness of 100 $\mu$m, a hard coat-coating material containing an oligothiophene derivative (SEPLEGYDA HC-A01 manufactured by Shin-Etsu Polymer Co., Ltd.) was coated by use of a roll coater. Subsequently, the resulting film was dried under the atmosphere of 80°C for 5 minutes, and passed under a 9.6 kW-high pressure mercury lamp at a position 20 cm apart from the lamp with a speed of 2.5 m/min, and thus an antistatic transfer film in which a hard coat layer was formed was obtained.

Example 21

Preparation of an ultraviolet curable mixture containing a (meth)acrylate compound having a fluorine atom:

Fifty parts of dipentaerythritol hexaacrylate (M400 manufactured by Toagosei Co., Ltd.), 30 parts of trimethylolpropane triacrylate (M309 manufactured by Toagosei Co., Ltd.), and 20 parts of 1, 6-hexanediol diacrylate (C6DA manufactured by Osaka Organic Chemical Industry Ltd.) as a compound having at least two (meth)acryloyloxy groups in the molecule, 0.4 part as a solid content of a (meth)acrylate compound having a fluorine atom (Optool DAC manufactured by Daikin Industries, Ltd.) and 2 parts of 2, 4, 6-trimethylbenzoyl-diphenyl-phosphineoxide (DAROCUR TPO manufactured by Ciba Japan K. K.) as an active energy ray-decomposable polymerization initiator were mixed, and an ultraviolet curable mixture was obtained. Note that, Optool DAC contains 80% of 2, 2, 3, 3-tetrafluoro-1-propanol.

Production of a laminate film in which a detachable water-repellent layer is laminated:

On one side of a PET film (Teijin Tetoron Film OX manufactured by Teijin DuPont Films Japan Limited) having a thickness of 100 $\mu$m, where an easy-adhesion treatment had been applied, a coating agent containing fluorine (Novec EGC-1720 manufactured by Sumitomo 3M Limited) was coated by use of a roll coater in such a way that thickness of a thin layer of the dried coating agent would become 10 nm. The resulting film was passed through a hot air drying section at 60°C for 10 minutes. This film was left to stand at a room temperature for 3 hours, and a PET film laminated with the thin layer was obtained. Then, the ultraviolet curable mixture prepared in the above-mentioned method was coated on the thin layer side of the 100 $\mu$m thickness-PET film. Then, a PET film (Teijin Tetoron Film G2C manufactured by Teijin DuPont Films Japan Limited) having a thickness of 25 $\mu$m was laminated on the ultraviolet curable mixture-coated side of the 100 $\mu$m thickness-PET film, with a non-corona-treated side of the 25 $\mu$m thickness-PET film brought into contact with the ultraviolet curable mixture-coated side, and passed through a press roll with a speed of 0.25 m/min in such a way that a thickness of a water-repellent layer to be obtained would become 10 $\mu$m. Then, the resulting laminate in which the 100 $\mu$m thickness-PET film, the thin layer, the ultraviolet curable mixture, and the 25 $\mu$m thickness-PET film were laminated was kept for 1 minute, and passed under a metal halide lamp having a power output of 120 W/cm at a position 24 cm apart from the lamp with a speed of 0.25 m/min, and thus the ultraviolet curable mixture was cured. Then, the 25 $\mu$m thickness-PET film was detached, and a laminate film was obtained in which the thin layer obtained by drying of a coating agent containing fluorine "Novec EGC-1720" and a detachable water-repellent layer were laminated on the PET film.

The same procedure as in Example 18 was carried out, by use of the same photo-polymerizable liquid, mold, and production condition, except that the aforementioned film was used as the transfer film, and the resin substrate was prepared. Subsequently, the film was detached at the interface of the thin layer and the water-repellent layer, and thus a laminate in which the water-repellent layer was laminated on the resin substrate was obtained. The evaluation results are shown in Table 5.

Comparative example 1

The same procedure as in example 3 in Japanese Patent Application Laid-Open No. Hei 4-114,001 was carried out except that the thickness was changed to 1 mm an acrylic resin sheet was produced by thermal polymerization. In this case, a temperature peak caused by exothermic heat of polymerization was detected at 11 minutes after the start of heating.

Comparative example 2

The same procedure as in Example 1 was carried out except that 65 parts of methyl methacrylate monomer and 35 parts of methyl methacrylate polymer beads (BR-83 manufactured by Mitsubishi Rayon Co., Ltd.; having weight average molecular weight of 40,000) were used, and a resin sheet was obtained. However, the viscosity of the ultraviolet ray-polymerizable viscous liquid was too low and the edge parts of the resin sheet became thin because of the drain of the liquid at the time of the former stage-heating after supply of the liquid from the die before ultraviolet ray irradiation, and a resin sheet poor in appearance having roughness around the center of the width direction on the surface facing to the film was obtained. In this case, the temperature peak in the section of ultraviolet ray irradiation was detected at 5.5 minutes after the start of the irradiation.

Comparative example 3

The same procedure as in Example 1 was carried out except that 82 parts of methyl methacrylate monomer and 18 parts of methyl methacrylate polymer beads (BR-85 manufactured by Mitsubishi Rayon Co., Ltd.; having weight average molecular weight of 300,000) were used, and a resin sheet was obtained. In this case, the temperature peak in the section of ultraviolet ray irradiation was detected at 10.4 minutes after the start of the irradiation. The longer polymerization time was necessary because the polymer content was low relative to the molecular weight of the polymer.

Comparative example 4

To 35 parts of methyl methacrylate monomer, 0.3 part of 1-hydroxy-cyclohexyl-phenyl ketone (Irgacure 184 manufactured by Ciba Specialty Chemicals, Inc.) as an ultraviolet ray-decomposable polymerization initiator, and 0.05 part of sodium dioctylsulfosuccinate (Aerosol OT-100 manufactured by Mitsui-Cyanamid, Ltd.) as a release agent were added and dissolved, respectively, and then 65 parts of methyl methacrylate polymer beads (BR-83 manufactured by Mitsubishi Rayon Co., Ltd.; having weight average molecular weight of 40,000) were dissolved therein by heating over the period of 60 minutes at 80°C, and thus an ultraviolet ray-polymerizable viscous liquid (polymer content being 64.8%) was prepared. The liquid was left to stand for 1 day at the normal temperature in order to remove foams formed at the time of preparation.
Subsequently, the ultraviolet ray-polymerizable viscous liquid was supplied from the supply die in the same manner as in Example 1, but a large amount of polymer formed by drying attached to a portion near the outlet of the die and it was impossible to supply the liquid continuously and hence a resin sheet could not be obtained.
The content of the polymer in the ultraviolet ray-polymerizable viscous liquid was above the upper limit of 60% and thus the monomer content was low, and the viscosity was increased largely by evaporation of even a small amount of monomer, and hence the problem of deposition of the polymer at the portion near the outlet of the die was caused and stable supply of the liquid could not be carried out.

Comparative example 5

The same procedure as in Example 1 was carried out in the production of polymer beads except that 0.15 part of 2, 2'-azobis(isobutylonitrile) as a polymerization initiator and 1.3 part of n-octyl mercaptan as a chain transfer agent were used, and polymer beads having a weight average molecular weight of 20,000 were obtained.
The same procedure as in Example 1 was carried out except that 45 parts of methyl methacrylate monomer and 55 parts of the above-mentioned polymer beads thus produced, and a resin sheet was obtained. In this case, the temperature peak in the section of ultraviolet ray irradiation was detected at 2.3 minutes after the start of the irradiation.

Although the appearance of the obtained resin sheet was good, 55% of a polymer having a weight average molecular weight of 20,000 was contained in the ultraviolet ray-polymerizable viscous liquid at the beginning, which affected the molecular weight of the obtained product, and thus the vicat softening temperature of the product was as low as about 104°C. The value is the same as that of the methacrylic resin sheet to be obtained by an extrusion method, and advantage of cast polymerization seems to be lost.

Comparative example 6

To 70 parts of methyl methacrylate monomer, 0.3 part of 1-hydroxy-cyclohexyl-phenyl ketone (Irgacure 184 manufactured by Ciba Specialty Chemicals, Inc.) as an ultraviolet ray-decomposable polymerization initiator, and 0.05 part of sodium dioctylsulfosuccinate (Aerosol OT-100 manufactured by Mitsui-Cyanamid, Ltd.) as a release agent were added and dissolved at a normal temperature, and then 30 parts of methyl methacrylate polymer (ACRYLITE L manufactured by Mitsubishi Rayon Co., Ltd.; having weight average molecular weight of 680,000) crushed to particles having the maximum diameter of 1 mm were dissolved therein by heating over the period of 30 minutes at 80°C, and it was found that blocks of nondis-solved polymer remained. Although further heating at the same temperature was continued for about 2 hours for dissolution, heat polymerization was started, maybe caused by emergence of radicals from a part of monomers, and the inside of the reaction vessel was polymerized and cured. The molecular weight of the polymer to be used was 500,000 or higher, which was too high, and this needed the long time for dissolution and caused the above situation.

Comparative example 7

A methacrylic resin substrate (ACRYLITE L001 manufactured by Mitsubishi Rayon Co., Ltd.) was placed on the adhesion layer side of the anti-reflective transfer film used in Example 18 and laminated each other, and pressed with a hydraulic compression molding machine (manufactured by Shoji-Tekko Co.) with a pressure of 10 MPa and a temperature of the upper and lower parts of 120°C for 10 minutes. A thermocouple was attached on the surface of the film, and the surface temperature was measured to be 100°C at 10 minutes after the press was started. Subsequently, the temperature was cooled to 30°C while the press was loaded, and then the film was detached. Adhesion between the anti-reflective layer and the resin substrate in the obtained anti-reflective laminate was insufficient, poor adhesion occurred at the interface of the resin substrate and the hard coat layer. In addition, productivity was low because the treatment was batch wise and the time for the treatment was long. Moreover, optical strain attributed to inhomogeneous cooling was generated. The results are shown in Table 2.

Comparative example 8

A coating material composed of a ultraviolet curable mixture containing 35 parts of a condensated compound mixture (TAS manufactured by Osaka Organic Chemical Industry Ltd.) of succinic acid/trimethylolethane/acrylic acid with the molar ratio of 1:2:4, 30 parts of 1, 6-hexanediol diacrylate (C6DA manufactured by Osaka Organic Chemical Industry Ltd.), 10 parts of pentaerythritol triacrylate (M305 manufactured by Toagosei Co., Ltd.), 25 parts of dipentaerythritol hexaacrylate (M400 manufactured by Toagosei Co., Ltd.), and 2 parts of 2, 4, 6-trimethylbenzoyl-diphenyl-phosphineoxide (DAROCUR TPO manufactured by Ciba Japan K. K.) was coated on the adhesion layer side of the anti-reflective transfer film used in Example 18 linearly in the width direction of the film and a coated plane was formed by use of a bar coater No. 50.

Subsequently, on a sheet of ACRYLITE L001 having a thickness of 2 mm and heated to 60°C, the aforementioned anti-reflective transfer film in which the coated layer was formed was overlaid, with the coated layer side faced to the ACRYLITE L001 sheet, and pressure-contacted by use of a rubber roll having a hardness of 40 degree as specified in JIS in such a way that the thickness of the coat containing the ultraviolet curable mixture would become 32 μm and the coat would not contain foams, with the excess amount of the coating material being squeezed out.

Note that the thickness of the coat containing the ultraviolet curable mixture was calculated from the amount of the ultraviolet curable mixture supplied and the developed area of the coating material.

Subsequently, after the lapse of 120 seconds while the system was kept at 60°C, the system was passed under a 9.6 kW-high pressure mercury lamp at a position 20 cm apart from the lamp with a speed of 2.5 m/min, while the system was irradiated with the lamp through the aforementioned transfer film, curing of the ultraviolet curable mixture was carried out and the second hard coat layer was formed.

Subsequently, when the aforementioned transfer film was detached, the anti-reflective layer, the first hard coat layer and the adhesion layer were all transferred to the second hard coat layer, and thus an anti-reflective laminate having a structure of the anti-reflective layer, the first hard coat layer, the adhesion layer, the second hard coat layer, and the acrylic substrate was obtained. The thickness of the first hard coat layer of the obtained resin laminate was 7

μm and that of the second hard coat layer was 30 μm.

The obtained anti-reflective laminate had a total light transmittance of 95% and a haze of 0.2%, and was excellent in transparency. Further, the increase of haze after abrasion on the anti-reflection layer was 0.1%, and the number of scars was 3. The minimum reflection rate was 0.2% at the wave length of 580 nm. However, the evaluation of adhesion was not good, with some detachment of the coat observed. The evaluation of warp was not good, with the amount of warp being more than 5 mm. The results are shown in Table 2.

It is thought that the anti-reflective laminate had a large warp because of the shrinkage stress of the second hard coat layer.

<Evaluation results of the tests>

Weight average molecular weight, content, and viscosity of a polymer as conditions of an ultraviolet ray-polymerizable viscous liquid, polymerization temperature, irradiation intensity of an ultraviolet ray, and time of the temperature peak caused by exothermic heat of polymerization after the start of the irradiation with an ultraviolet ray (heating in a water bath) as conditions of polymerization, and appearance, yellowness index, vicat softening temperature, heat shrinkage factor, and overall evaluation concerning a transparent resin sheet of each of Examples 1 to 21 and Comparative Examples 1 to 6 are shown in Table 1.

The overall evaluation was obtained by a comprehensive evaluation of a rate of polymerization based on a temperature peak caused by exothermic heat of polymerization, appearance of a sheet, yellowness index, softening temperature, and heat shrinkage as follows.

"◎" : It is used without any trouble.

"○": It can be used, but thermal resistance is slightly poor.

"Δ": It can be used, but an excessive equipment is necessary of the production or thermal resistance is remarkably poor.

"×" : It is poor in the thickness of a sheet or in appearance owing to roughness, or it can not be produced.

In each of Example 1 to 21, a good resin sheet was obtained in a short polymerization time, namely with the time of the temperature peak caused by exothermic heat of polymerization less than 10 minutes, as compared with the case of Comparative Example 1 which is an example of production of acrylic resin sheet with a continuous cell casting method. As a result, it is possible to cut down expenditure on equipment by reduction of the size of the equipment or to increase production output by increase in the production speed.

In each of Example 1 to 21, the appearance of the resin sheet was not inferior to that in the case of the continuous cell casting method, though a film having a lower stiffness than a metal belt was used on at least one side as opposed to the continuous cell casting method, because a syrup having a high degree of polymerization and a high viscosity was used. Although a little difference in the yellowness index is observed by the measurement, it causes no problem for the use of the product because such a difference is not detected by visual inspection. The softening temperature was high in every case in comparison with that of the product of the extrusion method, namely about 104°C in the extrusion method, though the softening temperature in each of Examples 1 to 6 was slightly low in comparison with that of Comparative Example 1 in which a continuous cell casting method using thermal polymerization was carried out and a polymerizable viscous liquid having a relatively high molecular weight was presumed to be used as a raw material and to be polymerized for a long enough time. In each of Examples 7 to 17, in which the polymerization was carried out at a low temperature, the softening temperature was almost the same as that of Comparative Example 1 and thus polymerization in a short time could be attained while the advantage of the continuous cell casting method was maintained. Although the heat shrinkage depends on the thermal resistance such as softening temperature, the effect of the stress at the time of production becomes large in these cases where heat treatment is carried out at a temperature higher than the softening temperature. In the present method of production, the facts that the method does not contain a stretching step as opposed to the case of a resin sheet obtained by an extrusion method, that the polymer content in the ultraviolet ray-polymerizable viscous liquid is high and thus the amount of shrinkage at the time of polymerization has been reduced, and that the resin sheet has become easy to follow a polymerization shrinkage by use of the film in comparison with the case of using a metal belt are presumed to contribute the reduction of heat shrinkage in the product.

In addition, in Examples 18 to 21, continuous production of the acrylic resin sheet and continuous functionalization thereof can be attained at the same time by use of the functional transfer film. In the continuous cell casting method, stainless steel endless belts are used on both sides and, from this restriction, it is difficult to previously form various functional layers, but in the present method, it is possible to produce a functionalized laminate having a good adhesion by a simple method of using a functional transfer film in which a functional layer has been previously formed.

Consequently, the resin sheet product of the present method has very low heat shrinkage in comparison with the resin sheet obtained by an extrusion method, and has low heat shrinkage even in comparison with the resin sheet plate obtained by a continuous cell casting method, so that heat shrinkage can be suppressed in the case of repeated printing accompanied by heating and thus shear in printing is less likely to occur.

Table 1

| | Mw* of polymer | Ultraviolet ray-polymerizable viscous liquid | | | | Polymerization temperapture (°C) | Irradiation intensity (mW/cm²) | Time of temperapture peak by polymerization (minute) | Transparent resin sheet | | | | | | Comprhensive evaluation |
| | | Polymer content (% by mass) | 35 - (9/200000) × Mw | Initiator (part by mass) | Viscosity (mPa·s) | | | | Appearance of sheet | Yellow-ness Index YI | Vicat softening temperapture (°C) | Heat shrinkage | | | |
| | | | | | | | | | | | | Between (1) - (3) | Between (2) - (4) | | |
| Ex. 1 | 40,000 | 39.9 | 33.2 | 0.3 | 8,300 | 60 | 5 | 3.8 | ○ | 0.7 | 107.3 | 1.38 | 1.36 | ○ |
| Ex. 2 | 100,000 | 34.9 | 30.5 | 0.3 | 25,600 | 60 | 5 | 4,8 | ◎ | 0.9 | 107.6 | 1.39 | 1.38 | ○ |
| Ex. 3 | 100,000 | 34.9 | 30.5 | 0.3 | 25,600 | 60 | 67 | 4.0 | ◎ | 3.1 | 106.8 | 1.40 | 1.41 | ○ |
| Ex. 4 | 180,000 | 34.9 | 26.9 | 0.3 | 82,900 | 60 | 5 | 4.0 | ◎ | 0.8 | 107.8 | 1.38 | 1.37 | ○ |
| Ex. 5 | 300,000 | 22.9 | 21.5 | 0.3 | 25,100 | 60 | 5 | 7.0 | ◎ | 0.9 | 107.9 | 1.37 | 1.37 | ○ |
| Ex. 6 | 480,000 | 14.9 | 13.4 | 0.3 | 69,400 | 60 | 5 | 8.0 | ◎ | 1.1 | 108.2 | 1.39 | 1.38 | ○ |
| Ex. 7 | 40,000 | 39.9 | 33.2 | 0.3 | 8,300 | 20 | 5 | 5.1 | ○ | 0.9 | 109.6 | 1.22 | 1.21 | ◎ |
| Ex. 8 | 100,000 | 34.9 | 30.5 | 0.3 | 25,600 | 20 | 5 | 6.8 | ◎ | 1.0 | 109.8 | 1.23 | 1.22 | ◎ |
| Ex. 9 | 180,000 | 34.9 | 26.9 | 0.3 | 82,900 | 20 | 5 | 6.1 | ◎ | 1.0 | 110.1 | 1.21 | 1.21 | ◎ |
| Ex. 10 | 40,000 | 54.9 | 33.2 | 0.1 | *1 | 20 | 5 | 2.1 | ◎ | 0.7 | 108.5 | 1.19 | 1.19 | ◎ |
| Ex. 11 | 100,000 | 49.9 | 30.5 | 0.1 | *1 | 20 | 5 | 2.7 | ◎ | 0.7 | 109.2 | 1.2 | 1.2 | ◎ |
| Ex. 12 | 300,000 | 39.9 | 21.5 | 0.3 | *1 | 20 | 5 | 3.9 | ◎ | 0.8 | 110.2 | 1.21 | 1.22 | ◎ |
| Ex. 13 | 100,000 | 34.9 | 30.5 | 0.3 | 25,600 | 20 | 5 | 7.0 | ◎ | 1.0 | 109.8 | 1.21 | 1.22 | ◎ |
| Ex. 14 | 300,000 | 22.9 | 21.5 | 0.3 | 25,100 | 20 | 10 | 7.2 | ◎ | 1.3 | 109.9 | 1.20 | 1.22 | ◎ |
| Ex. 15 | 40,000 | 54.9 | 33.2 | 0.1 | *1 | 20 | 5 | 2.1 | ◎ | 0.7 | 108.5 | 1.19 | 1.19 | ◎ |
| Ex. 16 | 100,000 | 49.9 | 30.5 | 0.1 | *1 | 20 | 5 | 2.7 | ◎ | 0.7 | 109.2 | 1.20 | 1.20 | ◎ |
| Ex. 17 | 300,000 | 39.9 | 21.5 | 0.3 | *1 | 20 | 5 | 3.9 | ◎ | 0.8 | 110.2 | 1.21 | 1.22 | ◎ |
| Ex. 18 - 21 | 40,000 | 39.8 | 33.2 | 0.5 | 8,300 | 20 | 5 | 4.9 | ○ | *2 | 108.7 | 1.23 | 1.23 | ◎ |
| Comp. Ex. 1 | - | 28.0 | - | - | 2,000 | 80 | - | 11.0 | ◎ | 0.7 | 110.8 | 1.38 | 1.42 | △ |
| Comp Ex. 2 | 40,000 | 34.9 | 33.2 | 0.3 | 1,840 | 60 | 5 | 5.5 | × | 1.0 | 107.2 | 1.39 | 1.38 | × |

| | Ultraviolet ray-polymerizable viscous liquid | | | | | Polymerization temperature (°C) | Irradiation intensity (mW/cm$^2$) | Time of temperapture peak by polymerization (minute) | Transparent resin sheet | | | | | |
|---|---|---|---|---|---|---|---|---|---|---|---|---|---|---|
| | Mw* of polymer | Polymer content (% by mass) | 35 - (9/200000) × Mw | Initiator (part by mass) | Viscosity (mPa_· s) | | | | Appearance of sheet | Yellow-ness Index YI | Vicat softening temperapture (°C) | Heat shrinkage | | Comprhensive evaluation |
| | | | | | | | | | | | | Between (1) - (3) | Between (2) - (4) | |
| Comp. Ex.3 | 300,000 | 17.9 | 21.5 | 0.3 | 25,100 | 60 | 5 | 10.4 | ◎ | 1.2 | 107.3 | 1.39 | 1.38 | Δ |
| Comp. Ex.4 | 100,000 | 64.8 | 30.5 | 0.3 | *1 | - | - | - | ×× | - | - | - | - | × |
| Comp. Ex.5 | 20,000 | 54.8 | 34.1 | 0.3 | 560,000 | 60 | 5 | 2.3 | ◎ | 0-7 | 104.5 | 1.38 | 1.39 | Δ |
| Comp. Ex.6 | 680.000 | 29.9 | 4.4 | 0.3 | - | - | - | - | - | - | - | - | - | × |

*1: unmeasurable because viscosity is beyond the upper detection limit (2,000,000 mPa·s) of viscometer
*2: shown in Tables 2 to 5 because the results are different from each other
*Mw: weight average molecular weight

EP 2 314 633 B1

Table 2

|  | Total light transmittance (%) | Haze (%) | YI | Abrasion resistance (%) | Number of scars (number) | Anti-reflection function (%) | Adhesion | Warp |
|---|---|---|---|---|---|---|---|---|
| Ex. 18 | 95.0 | 0.2 | 5.2 | 0.1 | 3 | 0.2 | 100 | ○ |
| Comp. Ex. 7 | 95.0 | 0.2 | 5.2 | 0.1 | 3 | 0.2 | 20 | ○ |
| Comp. Ex. 8 | 95.0 | 0.2 | 5.2 | 0.1 | 3 | 0.2 | 80 | × |

Table 3

|  | Total light transmittance (%) | Haze (%) | YI | Abrasion resistance (%) | Number of scars (number) | Adhesion | Warp |
|---|---|---|---|---|---|---|---|
| Ex. 19 | 92.0 | 0.1 | 4.0 | 0 | 0 | 100 | ○ |

Table 4

|  | Total light transmittance (%) | Haze (%) | YI | Abrasion resistance (%) | Number of scars (number) | Anti-static function ($\Omega/\square$) | Adhesion | Warp |
|---|---|---|---|---|---|---|---|---|
| Ex. 20 | 91 | 0.3 | 3.0 | 0 | 0 | $4 \times 10^9$ | 100 | ○ |

Table 5

|  | Total light transmittance (%) | Haze (%) | YI | Abrasion resistance (%) | Number of scars (number) | Oil-based ink wipe-off property | Contact angle (degree) | | Adhesion | Warp |
|---|---|---|---|---|---|---|---|---|---|---|
|  |  |  |  |  |  |  | Water | Triolein |  |  |
| Ex. 21 | 92.0 | 0.2 | 5.2 | 0.1 | 3 | ○ | 106 | 71 | 100 | ○ |

INDUSTRIAL APPLICABILITY

The acrylic resin sheet to be obtained by the method of the present invention is suitable for the uses as optical sheets like faceplates of displays such as mobile phones and liquid crystal displays, in which transparency, flatness, and thermal resistance are required.

EXPLANATION OF NUMERALS

1: Supply die
2: Active energy ray-polymerizable viscous liquid
2': Transparent resin sheet
3: Endless belt

4: Active energy ray-irradiation device
5: Film transmissive to the active energy ray
6: Device for letting out a film transmissive to the active energy ray
7: Device for winding up a film transmissive to the active energy ray
8: Upper surface press roll
8' : Lower surface press roll
9: Former stage-heating mechanism
10: Latter stage-heating mechanism
11: Main pulley
12: Main pulley
13: First film
14: Device for letting out the first film
15: Device for winding up the first film
16: Second film
17: Device for letting out the second film
18: Device for winding up the second film

**Claims**

1. A method for continuously producing an acrylic resin sheet containing 50% by mass or more of methyl methacrylate units, comprising the steps of:

   supplying an active energy ray-polymerizable viscous liquid which contains a polymer, satisfies the following equations (1) and (2), and has a viscosity of 5,000 mPa·s or more at 20°C to an endless belt which is transferred; laminating a film transmissive to the active energy ray on the liquid; and irradiating the liquid with the active energy ray through the film to cure the liquid,

$$30,000 \leq Mw \leq 500,000 \qquad (1)$$

$$35 - (9/200,000) \times Mw \leq P \leq 60 \qquad (2)$$

   wherein, in these equations, Mw represents a weight average molecular weight [-] of the polymer contained in the liquid, and P represents a content [% by mass] of the polymer contained in the liquid.

2. The method according to claim 1, wherein the endless belt is a stainless steel endless belt.

3. A method for continuously producing an acrylic resin sheet containing 50% by mass or more of methyl methacrylate units, comprising the steps of:

   holding an active energy ray-polymerizable viscous liquid which contains a polymer, satisfies the following equations (1) and (2), and has a viscosity of 5,000 mPa·s or more at 20°C between first and second films, at least one of which is transmissive to the active energy ray; and irradiating the liquid with the active energy ray from outside of one or both of the films to cure the liquid,

$$30,000 \leq Mw \leq 500,000 \qquad (1)$$

$$35 - (9/200,000) \times Mw \leq P \leq 60 \qquad (2)$$

   wherein, in these equations, Mw represents a weight average molecular weight [-] of the polymer contained in the liquid, and P represents a content [% by mass] of the polymer contained in the liquid.

4. The method according to claim 1 or 3, wherein the active energy ray-polymerizable viscous liquid has a viscosity of 10,000 mPa·s or more at 20°C.

5. The method according to claim 1 or 3, wherein the acrylic resin sheet contains 90% by mass or more of methyl methacrylate units.

6. The method according to claim 1 or 3, wherein intensity of irradiation with the active energy ray is in a range of from 1 to 30 mW/cm$^2$.

7. The method according to claim 1 or 3, wherein the active energy ray-polymerizable viscous liquid has a temperature of 50°C or lower when irradiated with the active energy ray.

8. The method according to claim 1 or 3, further comprising the step of heat treatment of 100°C or higher after the irradiation with the active energy ray.

9. The method according to claim 1, further comprising the step of detaching a cured acrylic resin sheet from the endless belt and the film transmissive to the active energy ray.

10. The method according to claim 1, wherein a resin sheet in which a detachable functional layer is laminated is prepared in such a way that said functional layer is formed on one side of the film transmissive to the active energy ray and the active energy ray-polymerizable viscous liquid is polymerized and cured with said side of the film brought into contact with the active energy ray-polymerizable viscous liquid, and thereafter, said resin sheet is detached from the endless belt and the film transmissive to the active energy ray.

11. The method according to claim 3, wherein a resin sheet in which a detachable functional layer is laminated is prepared in such a way that said functional layer is formed on one side of at least one of the first and second films and the active energy ray-polymerizable viscous liquid is polymerized and cured with said side of the film brought into contact with the active energy ray-polymerizable viscous liquid.

12. The method according to claim 10 or 11, wherein the functional layer is a layer having at least one function of anti-reflection, anti-glareness, hard coat, anti-staticity, and dirt-prevention.

13. The method according to claim 10 or 11, wherein a film in which an adhesion layer has been formed on the functional layer is used.

14. The method according to claim 3, further comprising the step of detaching a cured acrylic resin sheet from the first and second films.

**Patentansprüche**

1. Verfahren zur kontinuierlichen Erstellung einer Acrylharzfolie, enthaltend 50 Masse-% oder mehr Methylmethacrylateinheiten, umfassend die Schritte:

   Zuführen einer durch aktive Energiestrahlung polymerisierbaren, viskosen Flüssigkeit, welche ein Polymer enthält, die folgenden Gleichungen (1) und (2) erfüllt und eine Viskosität von 5.000 mPa·s oder mehr bei 20°C aufweist, zu einem Endlosband, das transferiert wird;
   Laminieren eines für die aktive Energiestrahlung durchlässigen Films auf die Flüssigkeit; und
   Bestrahlen der Flüssigkeit mit der aktiven Energiestrahlung durch den Film, um die Flüssigkeit zu härten,

$$30.000 \leq Mw \leq 500.000 \qquad (1)$$

$$35 - (9/200.000) \times Mw \leq P \leq 60 \qquad (2)$$

   worin in diesen Gleichungen Mw ein gewichtsmittleres Molekulargewicht [-] des in der Flüssigkeit enthaltenen Polymeren bedeutet und P einen Gehalt [Masse-%] des in der Flüssigkeit enthaltenen Polymeren bedeutet.

**2.** Verfahren nach Anspruch 1, wobei das Endlosband ein Endlosband aus nicht rostendem Stahl ist.

**3.** Verfahren zur kontinuierlichen Herstellung einer Acrylharzfolie, enthaltend 50 Masse-% oder mehr Methylmethacrylateinheiten, umfassend die Schritte:

Halten einer durch aktive Energiestrahlung polymerisierbaren, viskosen Flüssigkeit, welche ein Polymer enthält, die folgenden Gleichungen (1) und (2) erfüllt und eine Viskosität von 5.000 mPa·s oder mehr bei 20°C aufweist, zwischen einem ersten und einem zweiten Films, von denen mindestens einer für die aktive Energiestrahlung durchlässig ist; und
Bestrahlen der Flüssigkeit mit der aktiven Energiestrahlung von außerhalb des einen oder der beiden Filme, um die Flüssigkeit zu härten,

$$30.000 \leq \mathrm{Mw} \leq 500.000 \qquad (1)$$

$$35 - (9/200.000) \times \mathrm{Mw} \leq \mathrm{P} \leq 60 \qquad (2)$$

worin in diesen Gleichungen Mw ein gewichtsmittleres Molekulargewicht [-] des in der Flüssigkeit enthaltenen Polymeren bedeutet und P einen Gehalt [Masse-%] des in der Flüssigkeit enthaltenen Polymeren bedeutet.

**4.** Verfahren nach Anspruch 1 oder 3, wobei die durch aktive Energiestrahlung polymerisierbare, viskose Flüssigkeit eine Viskosität von 10.000 mPa·s oder mehr bei 20°C aufweist.

**5.** Verfahren nach Anspruch 1 oder 3, wobei die Acrylharzfolie 90 Masse-% oder mehr Methylnethacrylateinheiten enthält.

**6.** Verfahren nach Anspruch 1 oder 3, wobei die Intensität der Bestrahlung mit der aktiven Energiestrahlung im Bereich von 1 bis 30 mW/cm$^2$ liegt.

**7.** Verfahren nach Anspruch 1 oder 3, wobei die durch aktive Energiestrahlung polymerisierbare, viskose Flüssigkeit eine Temperatur von 50°C oder darunter aufweist, wenn sie mit der aktiven Energiestrahlung bestrahlt wird.

**8.** Verfahren nach Anspruch 1 oder 3, umfassend weiterhin den Schritt der Wärmebehandlung bei 100°C oder höher nach der Bestrahlung mit der aktiven Energiestrahlung,

**9.** Verfahren nach Anspruch 1, umfassend weiterhin den Schritt des Entfernens einer gehärteten Acrylharzfolie von dem Endlosband und dem für die aktive Energiestrahlung durchlässigen Film.

**10.** Verfahren nach Anspruch 1, wobei eine Harzfolie, in welcher eine entfernbare funktionale Schicht laminiert ist, in solcher Weise hergestellt wird, dass die funktionale Schicht auf einer Seite des für die aktive Energiestrahlung durchlässigen Films ausgebildet wird und die durch aktive Energiestrahlung polymerisierbare, viskose Flüssigkeit mit der Seite des Films, die mit der durch aktive Energiestrahlung polymerisierbaren, viskosen Flüssigkeit in Berührung gebracht wurde, polymerisiert und gehärtet wird, und danach die Harzfolie von dem Endlosband und dem für die aktive Energiestrahlung durchlässigen Film entfernt wird.

**11.** Verfahren nach Anspruch 3, wobei eine Harzfolie, in welcher eine entfernbare funktionale Schicht laminiert ist, in solcher Weise hergestellt wird, dass die funktionale Schicht auf einer Seite mindestens eines des ersten und zweiten Films gebildet wird, und die durch aktive Energiestrahlung polymerisierbare, viskose Flüssigkeit mit der Seite des Films, die mit der durch aktive Energiestrahlung polymerisierbaren, viskosen Flüssigkeit in Berührung gebracht wurde, polymerisiert und gehärtet wird.

**12.** Verfahren nach Anspruch 10 oder 11, wobei die funktionale Schicht eine Schicht ist, die mindestens eine Funktion aus Antireflektion, Antiglanz, Hartbeschichtung, antistatischer Eigenschaft und Schmutzverhindercang aufweist.

**13.** Verfahren nach Anspruch 10 oder 11, wobei ein Film, bei dem eine Haftschicht auf der funktionalen Schicht ausgebildet worden ist, verwendet wird.

**14.** Verfahren nach Anspruch 3, umfassend weiterhin den Schritt des Entfernens einer gehärteten Acrylharzfolie von dem ersten und dem zweiten Films.

**Revendications**

**1.** Procédé de production en continu d'une feuille de résine acrylique contenant 50 % en masse ou plus d'unités de méthacrylate de méthyle, comprenant les étapes consistant à :

apporter un liquide visqueux polymérisable sous l'effet d'un rayonnement à énergie active qui contient un polymère, satisfait aux équations (1) et (2) suivantes, et a une viscosité de 5 000 mPa·s ou plus à 20 °C à une courroie sans fin qui est transférée ;
laminer un film qui peut transmettre le rayonnement à énergie active sur le liquide ; et
irradier le liquide à l'aide du rayonnement à énergie active à travers le film pour durcir le liquide,

$$30\ 000 \leq Mw \leq 500\ 000 \qquad (1)$$

$$35 - (9/200\ 000) \times Mw \leq P \leq 60 \qquad (2)$$

où, dans ces équations, Mw représente le poids moléculaire moyen en poids [-] du polymère contenu dans le liquide, et P représente la teneur [% en masse] du polymère contenu dans le liquide.

**2.** Procédé selon la revendication 1, dans lequel la courroie sans fin est une courroie sans fin en acier inoxydable.

**3.** Procédé de production en continu d'une feuille de résine acrylique contenant 50 % en masse ou plus d'unités de méthacrylate de méthyle, comprenant les étapes consistant à :

maintenir un liquide visqueux polymérisable sous l'effet d'un rayonnement à énergie active qui contient un polymère, satisfait aux équations (1) et (2) suivantes, et a une viscosité de 5 000 mPa·s ou plus à 20°C entre les premier et second films, au moins l'un d'eux pouvant transmettre le rayonnement à énergie active ; et
irradier le liquide à l'aide du rayonnement à énergie active depuis l'extérieur de l'un ou des deux films pour durcir le liquide,

$$30\ 000 \leq Mw \leq 500\ 000 \qquad (1)$$

$$35 - (9/200\ 000) \times Mw \leq P \leq 60 \qquad (2)$$

où, dans ces équations, Mw représente le poids moléculaire moyen en poids [-] du polymère contenu dans le liquide, et P représente la teneur [% en masse] du polymère contenu dans le liquide.

**4.** Procédé selon la revendication 1 ou 3, dans lequel le liquide visqueux polymérisable sous l'effet d'un rayonnement à énergie active a une viscosité de 10 000 mPa·s ou plus à 20 °C.

**5.** Procédé selon la revendication 1 ou 3, dans lequel la feuille de résine acrylique contient 90 % en masse ou plus d'unités de méthacrylate de méthyle.

**6.** Procédé selon la revendication 1 ou 3, dans lequel l'intensité de l'irradiation par le rayonnement à énergie active se situe dans une plage de 1 à 30 mW/cm$^2$.

**7.** Procédé selon la revendication 1 ou 3, dans lequel le liquide visqueux polymérisable sous l'effet d'un rayonnement à énergie active a une température inférieure ou égale à 50 °C lorsqu'il est irradié par le rayonnement à énergie active.

**8.** Procédé selon la revendication 1 ou 3, comprenant en outre l'étape de traitement thermique à 100 °C ou plus après l'irradiation par le rayonnement à énergie active.

9. Procédé selon la revendication 1, comprenant en outre l'étape consistant à détacher une feuille de résine acrylique durcie de la courroie sans fin et du film qui peut transmettre le rayonnement à énergie active.

10. Procédé selon la revendication 1, dans lequel une feuille de résine dans laquelle une couche fonctionnelle détachable est laminée est préparée de telle sorte que ladite couche fonctionnelle soit formée sur un côté du film qui peut transmettre le rayonnement à énergie active et que le liquide visqueux polymérisable sous l'effet d'un rayonnement à énergie active soit polymérisé et durci, ledit côté du film étant mis en contact avec le liquide visqueux polymérisable sous l'effet d'un rayonnement à énergie active, et ensuite, ladite feuille de résine est détachée de la courroie sans fin et du film qui peut transmettre le rayonnement à énergie active.

11. Procédé selon la revendication 3, dans lequel une feuille de résine dans laquelle une couche fonctionnelle détachable est laminée est préparée de telle sorte que ladite couche fonctionnelle soit formée sur un côté d'au moins l'un des premier et second films et que le liquide visqueux polymérisable sous l'effet d'un rayonnement à énergie active soit polymérisé et durci, ledit côté du film étant mis en contact avec le liquide visqueux polymérisable sous l'effet d'un rayonnement à énergie active.

12. Procédé selon la revendication 10 ou 11, dans lequel la couche fonctionnelle est une couche ayant au moins une fonction anti-reflet, anti-éblouissement, revêtement dur, antistatique et anti-salissures.

13. Procédé selon la revendication 10 ou 11, dans lequel est utilisé un film dans lequel une couche d'adhérence a été formée sur la couche fonctionnelle.

14. Procédé selon la revendication 3, comprenant en outre l'étape consistant à détacher une feuille de résine acrylique durcie des premier et second films.

FIG. 1

FIG. 2

FIG. 3

## REFERENCES CITED IN THE DESCRIPTION

**Patent documents cited in the description**

- US 5993951 A
- JP 2007284465 A
- US 4803026 A
- JP SHO4641602 B
- JP HEI4114001 B
- JP HEI6239905 B
- JP 2002011742 A
- JP 2002011741 A
- JP 2000158599 A